# EUROPEAN PATENT SPECIFICATION

(11) **EP 3 863 238 B1**
(45) Date of publication and mention of the grant of the patent: **20.08.2025**
(21) Application number: 20188796.5
(22) Date of filing: 31.07.2020
(51) Int. Cl.: H04L 45/24, H04L 47/41, H04L 12/14, H04L 12/46, H04L 41/044, H04L 41/0806, H04L 41/5009, H04M 15/00, H04W 4/24, H04W 88/14, H04W 76/12

(54) **SOFTWARE-DEFINED VIRTUAL MULTI-SERVICE TUNNEL NETWORKING**
SOFTWAREDEFINIERTE VIRTUELLE MEHRDIENSTTUNNELVERNETZUNG
RÉSEAUTAGE DE TUNNEL MULTI-SERVICE VIRTUEL DÉFINI PAR LOGICIEL

(30) Priority: 08.02.2020 US 202062971947 P; 06.07.2020 US 202063048444 P; 23.07.2020 US 202016936542
(43) Date of publication of application: 11.08.2021
(73) Proprietor: Yartsev, Ihor, 10105 Vilnius (LT)
(72) Inventor: Yartsev, Ihor, 10105 Vilnius (LT); Serhieiev, Serhii, 25128 Vilnius (LT)
(74) Representative: Zaboliene, Reda

(56) References cited:
- US-A1- 2017 171 158
- US-A1- 2018 248 761
- US-A1- 2019 268 181

## Description

### BACKGROUND

### TECHNICAL FIELD

The present invention relates generally to methods and systems for transporting data packets pertaining to one or more computer applications, among devices in a computer network, with enhanced throughput, security, and quality, using one or more dynamic tunnels configured and managed by software, and in particular, to methods and systems suitable for the transport of data packets from system or user applications with enhanced performance.

### RELATED ART

At its core, the main purpose of any information network is to deliver data (content) to the recipient (user) with a guaranteed quality of services, including bandwidth, delay and allowable limit of delay variation. However, with the current growth in the number of users, applications and the amount of content they consume (traffic), it is becoming increasingly difficult to ensure the quality of network services. The use of legacy technologies to build connections between autonomous systems with different internal routing, technical and logical segments is a major challenge and drawback of global data networks. The consequences are a decrease in the speed of information transmission, the presence of large non-useful data overhead on packets traversing the networks that lead to inefficient use of network bandwidth, significant increase in network delays, lower quality of end user experience, etc.

Patent document US20190268181A1 (published 2019-08-29) discloses methods and systems for transmitting and receiving data between a first node and a second node through a first tunnel group and a second tunnel group respectively. The first node transmits data to the second node mainly through a first tunnel group and receives data from the second node mainly through a second tunnel group. In some embodiments, the first node receives first IP packets from one of its LAN interfaces and then transmits encapsulated first IP packets and then are transmitted mainly through a first one or more WAN interfaces to the second node. The first node receives encapsulated second IP packets mainly from the second node through a second one or more of its WAN interfaces. Second IP packets are then decapsulated and transmitted through one of the LAN interfaces of the first node.

Patent document US20170171153A1 (published 2017-06-15) discloses a method for secure communications between a transmitting computer and a receiving computer includes transmitting data from the transmitting computer over a first one-way link to a data security engine, receiving and validating the data within the data security engine, and, after validating the data, transmitting the data from the data security engine to the receiving computer over a second one-way link.

Patent document US20180248761A1 (published 2018-08-30) discloses methods and systems for managing VPN tunnels. A VPN concentrator establishes a first aggregated VPN connection and a second aggregated VPN connection with a rust host and a first network device respectively. When the first aggregated VPN connection comprises a first plurality of VPN tunnels, the VPN concentrator applies uplink and downlink bandwidth limits to each of the plurality of VPN tunnels. Similarly, when the second aggregated VPN connection comprise a second plurality of VPN tunnels, the VPN concentrator applies uplink and downlink bandwidth limits to each of the plurality of VPN tunnels. The first host encapsulates a first data packet in a first encapsulating packet and transmits the first encapsulating packet to a VPN concentrator using a first aggregated VPN connection. When the VPN concentrator receives the first encapsulating packet, the VPN concentrator decapsulates the first data packet from the first encapsulating packet and encapsulates the first data packet in a second encapsulating packet. The VPN concentrator then transmits the second encapsulating packet to a first network device using a second aggregated VPN connection.

### SUMMARY OF THE INVENTION

The present invention is directed to subject-matter as disclosed by the appended claims.

Multi-Service Tunnel Networking Technology (MSTNT) in accordance with embodiments of the present invention includes computer networking that provides systems and methods for deploying highly secure distributed data networks. MSTNT configures each network as an independent autonomous system connected to the global Internet, and routes packet traffic across the network independent of TCP/IP protocol. MSTNT enables the creation of logical tunnel connections with complete flexibility over the flow of data traffic, while ensuring that the order of delivery of isolated packages is maintained. MSTNT enables the creation also of monolithic communication channels from multiple transport IP channels, summing up the bandwidth of the individual sub-channels. The transport can involve Ethernet (IEEE 802.3) traffic tunnel transmission with arbitrary labels (e.g., IEEE 802.1, VLAN, IEEE 802.1-in-VLAN) and MTU size up to, e.g., 2048 bytes. The present systems cab be built on top of any data transmission channel, whether it is a dedicated mobile cellular connection or the Internet, abstracting routing technologies and physical devices and encrypting the data packets. The autonomous system can be located anywhere geographically and can use network products from any manufacturer. It can provide constant monitoring of the quality of tunnel connections and the load on them, allowing for central management of the entire network infrastructure. Accordingly, it can reduce the cost of transforming an existing network or operating one, providing the network operator with freedom of choice among vendors in subsequent operation or expansion of the network and a reduced need for specialized network engineering resources. MSTNT can help users to realize networking benefits, productivity gains, and cost savings on their existing network systems or with new network systems that they plan to deploy.

In one embodiment, a multi-service tunnel networking technology (MSTNT) system, which uses multiple internet service providers and forms logical tunnels, includes a tunnel module, which performs summing of data transport channels, enables data protection when transmitted over an unsecure network or manages Layer 2 Ethernet tunnels over Wide Area Networks (WAN); and a management and monitoring system (MMS) module, which enables network administrators to centrally monitor the status and operation of communication channels created by MSTNT technology; wherein the data packets' transportation from digital devices or their networks to a user and vice versa is through network data services.

In other embodiments, the MSTNT system can additionally comprise an A-Loop module, which includes a software application that operates in kernel and user space memory modules, receives and analyzes network traffic transmitted from the subscriber's network local area network (LAN) ports to a multi-service tunnel protocol (MSTP) tunnel in order to detect and block loops that appear in the network. The MSTNT system can additionally comprise a B-Test module including a client-server application which creates simplex and duplex load streams of user datagram protocol (UDP) or transmission control protocol (TCP) traffic of a bandwidth to measure quality of data transmissions, and is used for testing communication channels built using MSTNT technology. The MSTNT system can additionally comprise a Cryptocube including proprietary hardware equipment with integrated software, with several interfaces for connection to one or more designated networks, which comprises a platform crypto-module (PCM) including a software module implemented on proprietary hardware equipment to manage MSTP and multi-network transport protocol (MNTP) tunnel access control from authorized subscriber mobile devices, to enable the devices to receive and transfer data via the designated networks; and a management crypto mobile platform (MCMP) including a multiplatform software application implemented on a computer device, to administer PCM settings and to manage access to PCM from subscriber mobile devices.

In one embodiment, the tunnel module can include a tunnel collector module (TCM), which is used for controlling access to MSTNT tunnels from/to a central collector by automatically configuring tunnel access for each autonomous system that implements the MSTNT system; a multi-platform module (MPM), which provides for a user an access to the MSTNT tunnels by user devices, thereby controlling data transfer between the user devices and a local area collector; a platform mobile module (PMM), which is used to configure and manage MSTP connections from all devices to transfer data via cellular networks; and a platform crypto module (PCM) including a software module, which manages MSTP and MNTP tunnel access control from authorized subscriber mobile devices and enables the authorized subscriber mobile devices to receive and transfer data via the designated networks. The TCM can be configured as one or more of a regional collector to function as a backbone for a subscriber's MSTNT network, connecting all the control elements between geographic locations across the globe; a local area collector to enable traffic routing within a subscriber's MSTNT network; a mobile segment collector; and/or a reflector to act as a proxy device to route traffic.

The MSTNT system can further have a central collector (CC) module including a central registry and a controller, used for storing and handling configuration details for subscribers and their MSTNT networks, which is integrated with or independent of the MMS module. The MSTNT system can include an autonomous MSTNT system built on top of a data transmission channel, which allows abstracting routing technologies and physical devices and encrypting the data packets, the data transmission channel including a dedicated mobile cellular connection or the Internet. The MSTNT system can employ an operating system including a multi-platform tunnel operating system (MPT OS), installed on any telecommunication equipment based on X86, ARM, or MIPS processors. The MSTNT system can employ cloud infrastructure for docketing of the network architecture.

In another embodiment, an MSTNT method, which uses multiple internet service providers and forms logical tunnels, comprises receiving an internet protocol packet (IP packet) at a dispatch point; dispatching a MSTN packet to a logical tunnel; receiving the MSTN packet at a destination; and delivering the IP packet to a user where the IP data packets' transportation from digital devices or their networks to the user and vice versa is through network data services.

In other methods, dispatching the MSTN packet is performed by multiple transport IP channels, summing up bandwidth of individual sub-channels. The method can use MSTN packet fragmentation for the transportation of the data packets via the logical tunnel, and an order of delivery of isolated packages is maintained after the MSTN packet fragmentation, and the steps of dispatching and receiving the MSTN packet.

The MSTNT method can further include IP packets converted as MSTN packets before the transportation of the data packets via the logical tunnel; and IP packets reconstituted from MSTN packets after the transportation of the data packets via the logical tunnel. The MSTNT can be used in or by central management of an entire network infrastructure. The MSTNT method can automatically perform constant monitoring of quality of the logical tunnel connections and a load on them; when a channel in use becomes offline or is not working properly for a defined period of time, the channel is automatically changed into a new online channel; reservation of sub-channels is performed for future use, based on current MSTN packet dispatchment to the logical tunnel and future needs.

The data sent through the logical tunnel can be encrypted. The MSTNT method can filter MSTN packet duplicates. The MSTNT method can be employed for connection types including data dispatchment, digital telephony, and/or video conferencing (or others).

In still other embodiments, a multi-service tunnel networking technology (MSTNT) use for the data packets' transportation from digital devices or their networks to a user and vice versa through network data services can be employed, wherein an internet protocol packet (IP packet) is received at a dispatch point; a MSTN packet is dispatched to a logical tunnel; the MSTN packet is received at a destination; and the IP packet is delivered to a user.

### BRIEF DESCRIPTION OF THE DRAWINGS

The present invention will be better understood when considered in view of the attached drawings. The drawings, however, are presented merely to illustrate embodiments of the invention without limiting the invention in any manner whatsoever.

The present invention will be better understood when considered in view of the attached drawings. The drawings, however, are presented merely to illustrate embodiments of the invention without limiting the invention in any manner whatsoever.
FIG. 1 is a schematic depicting various components of an example mobile unit implementing the MSTNT system in accordance with aspects of the present invention.
FIG. 2 is a schematic depicting various components of an example physical network implementing the MSTNT system in accordance with aspects of the present invention.
FIG. 3 is a schematic depicting various components of an example logical network based on the MSTNT system in accordance with aspects of the present invention.
FIG. 4 is a schematic of steps to configure a subscriber device for connection to the subscriber's autonomous network based on the MSTNT system in accordance with aspects of the present invention.
FIG. 5 depicts a configuration of a subscriber device for connection to the subscriber's autonomous network based on the MSTNT system in accordance with aspects of the present invention.
FIG. 6 depicts a configuration of a network link to connect the authorized subscriber device to the subscriber's autonomous network based on the MSTNT system in accordance with aspects of the present invention.
FIG. 7 depicts a configuration of a MSTNT tunnel to connect the authorized subscriber user device to the subscriber's autonomous network based on the MSTNT system in accordance with aspects of the present invention.
FIG. 8 depicts management of an authorized subscriber device configured to connect through a MSTNT tunnel to an autonomous network based on the MSTNT system in accordance with aspects of the present invention.
FIG. 9 depicts a configuration of a basic tunnel setting to connect a subscriber device to the autonomous subscriber network in accordance with aspects of the present invention.
FIG. 10 depicts an example subscriber network configuration involving MSTNT collectors in accordance with aspects of the present invention.
FIG. 11 depicts the MSTN header for an exemplar data packet in accordance with aspects of the present invention.
FIG. 12 depicts the method by which a MSTNT tunnel processes a data packet in accordance with aspects of the present invention.
FIG. 13 depicts a schematic for packet handling in accordance with aspects of the present invention.
FIG. 14 depicts a schematic for handling packets in the kernel space of the operating system in accordance with aspects of the present invention.
FIG. 15 illustrates processing of IP and MNTP packets by the MSTP module in the kernel space of MPT OS in accordance with aspects of the present invention.
FIG. 16 depicts an embodiment of the present invention wherein a single data communication channel is dynamically configured by MSTN into multiple virtual MSTN tunnels, each of which can then be assigned to carry different packet streams from one or more services.
FIG. 17 depicts an embodiment of the present invention wherein a single data communication channel is dynamically configured by MSTN into multiple virtual MSTN tunnels, each of which can then be assigned to carry different packet streams from one or more local area networks.
FIG. 18 depicts the transfer of data using the MSTNT summation method in comparison to alternative methods in accordance with aspects of the present invention.
FIG. 19 depicts the MSTNT method to provide fail-over data connectivity in accordance with aspects of the present invention.
FIG. 20 depicts transfer of data using the MSTNT summation method in an example case of a failure in connectivity of a sub-channel, in comparison to alternative methods in accordance with aspects of the present invention.
FIG. 21 depicts real-time monitoring of the key performance indicators for a MSTN sub-channel in accordance with aspects of the present invention.
FIG. 22 depicts real-time monitoring of the key performance indicators of multiple MSTN sub-channels in hot mode in accordance with aspects of the present invention.
FIG. 23 depicts real-time monitoring of the key performance indicators of multiple MSTN sub-channels, contrasting hot and cold modes in accordance with aspects of the present invention.
FIG. 24 is a schematic with an illustrative comparison of various performance attributes for an example MSTNT network, labeled MSTN, with alternative networking systems and methods in accordance with aspects of the present invention.
FIG. 25 is a schematic depicting various channel operating modes in a MSTNT network and their benefits in accordance with aspects of the present invention.
FIG. 26 is a schematic illustrating an effect on different network performance attributes when using a MSTNT network (right side of FIG. 26) in accordance with aspects of the present invention compared to a traditional TCP/IP network (left side of FIG. 26).
FIG. 27 is a schematic depicting the summation of channel capacity feature of the MSTNT network (labelled as MSTNT), in comparison to alternative methods in accordance with aspects of the present invention.
FIG. 28 is a schematic depicting the ability for each data packet to carry more useful payload information in a MSTNT network (labelled "MSTNT Packet") in accordance with aspects of the present invention in comparison to traditional TCP/IP network systems.
FIG. 29 is a schematic illustrating a kernel-based model and performance of MSTNT in accordance with aspects of the present invention.
FIG. 30 depicts an embodiment of a MSTNT network to serve networking needs in an example WAN application context in accordance with aspects of the present invention.
FIG. 31 depicts an embodiment of a MSTNT network in accordance with aspects of the present invention to serve networking needs in an example data center application context.
FIG. 32 depicts an embodiment of a MSTNT network to serve networking needs in an example VoIP application context in accordance with aspects of the present invention.
FIG. 33 depicts an embodiment of a MSTNT network to serve networking needs in an example streaming media application context in accordance with aspects of the present invention.
FIG. 34 depicts an embodiment of a MSTNT network to serve networking needs in an example shared space application context in accordance with aspects of the present invention.
FIG. 35 depicts an embodiment of a MSTNT network to serve networking needs in an example IoT application context in accordance with aspects of the present invention.
FIG. 36 depicts an embodiment of a MSTNT network in accordance with aspects of the present invention to serve networking needs in an example live event application context.
FIG. 37 depicts an embodiment of a MSTNT network to serve networking needs in an example healthcare application context in accordance with aspects of the present invention.
FIG. 38 depicts an embodiment of a MSTNT network to serve networking needs in an example enterprise assurance application context in accordance with aspects of the present invention.
FIG. 39 depicts an embodiment of a MSTNT network to serve networking needs in an example transportation application context in accordance with aspects of the present invention.
FIG. 40 depicts an embodiment of a MSTNT network to serve networking needs in an example finance application context in accordance with aspects of the present invention.
FIG. 41 depicts an embodiment of a MSTNT network to serve hotspot connectivity needs of any enterprise in any location in accordance with aspects of the present invention.

### DETAILED DESCRIPTION OF THE INVENTION

In accordance with the present embodiments, new logical networking systems and methods of processing data packets are provided that can operate using existing physical communication channels and that can guarantee the quality of services (e.g., increased data throughput, reduced latency, limited jitter, enhanced data security, support for all devices attached to the network, simplified true end-to-end network configuration and administration, true centralized network monitoring, and reduced cost of network operation), while also improving the users' data experience. Any system or method described herein for downloading data packets is also contemplated as being suitable for uploading data packets and vice versa. Using the present invention would allow network operators and organizational network administrators to build and evolve highly flexible network configurations for any set of requirements.

### Multi-Service Tunnel Networking system and physical elements

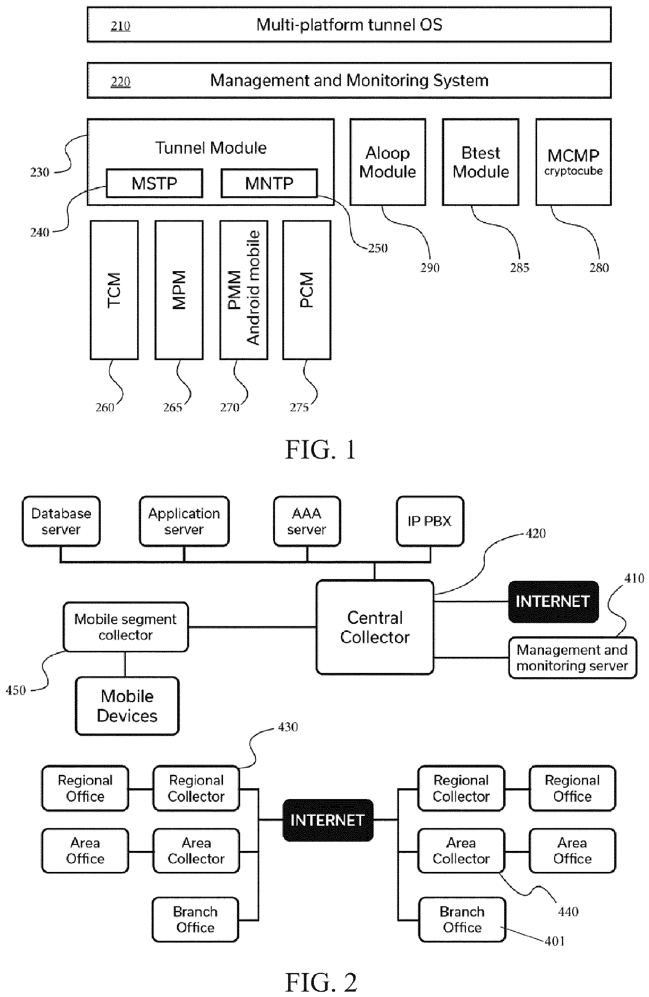

FIG. 1 depicts a block diagram of an exemplar MSTNT system. In accordance with one illustrative embodiment, a Multi-Service Tunnel Networking Technology (MSTNT) system comprises:
a Tunnel module (230), which performs summing of data transport channels, enables data protection when transmitted over an unsecure network or manages Layer 2 Ethernet tunnels over Wide Area Networks (WAN);
a Management and Monitoring System (MMS) module (220), which enables network administrators to centrally monitor the status and operation of communication channels created by the MSTNT technology.

A proprietary operating system, the Multi-Platform Tunnel Operating System (MPT OS) (210), is installed on any telecommunication equipment based on X86, ARM, or MIPS processors.

The Tunnel Module (TM) (230) can include two unique data transfer protocols to manage data transfer with other MSTNT modules: (1) Multi-Service Tunnel Protocol (MSTP) (240) and (2) Multi-Network Transport Protocol (MNTP)(250). The Tunnel module (230) can comprise:
a Tunnel Collector Module (TCM) (260), which is used for controlling access to MSTNT tunnels from/to the Central Collector by automatically configuring tunnel access for each Autonomous System that implements the MSTNT system;
a Multi-Platform Module (MPM) (265), which provides for the user an access to the MSTNT tunnels by user devices, thereby controlling data transfer between the user devices and the Local Area Collector (440).

A Platform Mobile Module (PMM) (270) is used to configure and manage MSTP connections from Android^{™} devices in order to transfer data via cellular networks.

A Platform Crypto Module (PCM) (275), a software module, manages MSTP and MNTP tunnel access control from authorized user mobile devices and enables the devices to receive and transfer data via the designated networks.

In addition to the Tunnel module (230) and the MMS (220) module, the MSTNT system could have the following modules: A-Loop Module (290), a software application that operates in the kernel and user space memory modules, receives and analyzes network traffic transmitted from the user's network LAN ports to the MSTP tunnel in order to detect and block loops that appear in the network; B-Test Module (285), a client-server application for testing communication channels built using MSTNT technology; a Cryptocube (280), a proprietary hardware equipment with integrated software, with several LTE/ Wi-Fi/ Ethernet^{™} interfaces for connection to one or more designated networks.

The Cryptocube (280) can include a Platform Crypto-Module (PCM), a software module implemented on proprietary hardware equipment to manage MSTP and MNTP tunnel access control from authorized user mobile devices, to enable the devices to receive and transfer data via the designated networks; and a Management Crypto Mobile Platform (MCMP), a multiplatform software application implemented on a computer device, to administer PCM settings and to manage access to PCM from user mobile devices.

FIG. 2 depicts an example physical computer network implementing the MSTNT system. This example MSTNT network comprises of a user branch office gateway device.

Tunnel Collector Modules (TCM) could be configured as a Regional Collector (430) to function as a backbone for a user's MSTNT network, connecting all the control elements between geographic locations across the globe; as a local Area Collector (440) to enable traffic routing within a user's MSTNT network; as a Mobile Segment Collector (450) or as a Reflector to act proxy devices to route traffic.

The MSTNT system also comprise a Monitoring and Management System (MMS)(410) and a Central Collector Module (TCM)(420), which may be integrated with or independent of the MMS.

### Multi-Service Tunnel Networking Technology: Logical Elements

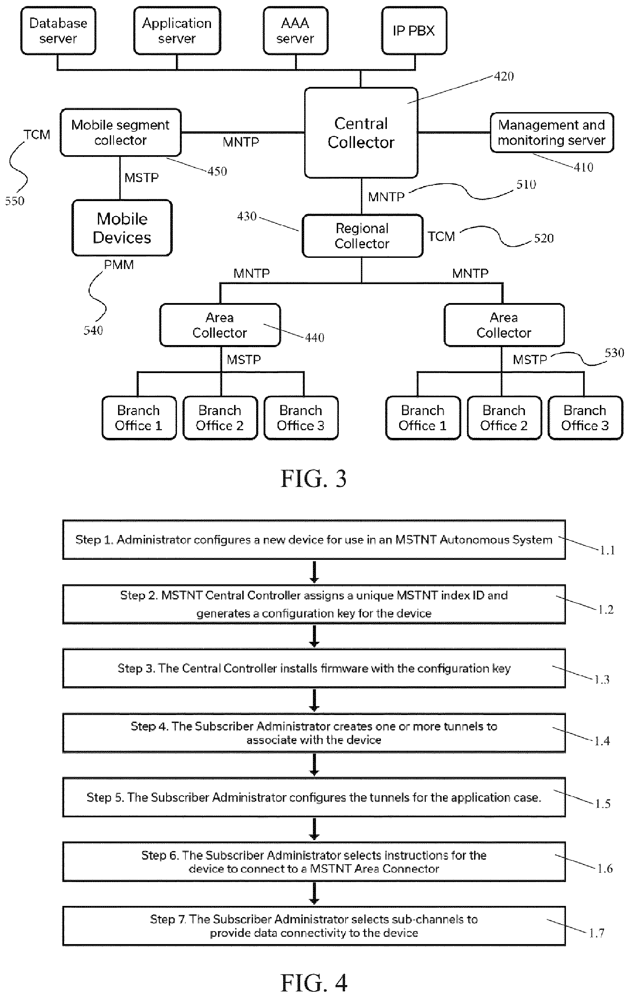

FIG. 3 depicts a logical view of an example MSTNT network and includes a user branch office gateway device with TM firmware installed to provide a MSTP connection (530) to a TCM that is configured as a Local Area Collector (440). The Local Area Collector with TM installed provides a MNTP connection (510) to a TCM that is configured as a Regional Area Collector (430). The Regional Area Collector with TM installed can also provide a MNTP connection to a TCM that is configured as a Reflector. A TCM (550) can be specially configured as a Mobile Segment Collector for mobile devices (540) via cellular LTE. Regional Area Collectors can include independent MNTP connections to the Central Collector. A Monitoring and Management System (MMS) module creates, configures, monitors, and manages each user network as an independent autonomous MSTNT system. The Central Collector, can be integrated with, or independent from the Monitoring and Management System (MMS) module. The example MSTNT network described above is illustrative only and is not intended to limit other configurations and architectures of TCMs for local, regional, reflector and mobile purposes.

### MSTNT Functions of Logical Elements

By reference to FIG. 1, below is a description of the functions of each logical element comprising the MSTNT network.

The Tunnel Module (230, FIG. 1) performs transparent summing of data transport channels, enables data protection when transmitted over an unsecure network (encapsulation), and manages Layer 2 (OSI model) Ethernet tunnels over Wide Area Networks (WAN), (i.e., Internet and Intranet).

MSTP creates and organizes Layer 2 Ethernet tunnels over WAN networks (Internet and Intranet) and also manages and monitors tunnel-forming equipment. MSTP connects a User's Branch Office Gateway to the Local Area Collector, enabling Layer 2 Ethernet transport to transmit data packets using either Virtual Local Area Network (VLAN) or 802.1Q technology (single tag, QinQ or untagged).

MNTP enables transparent transport channel summation, data protection when transmitting over an unprotected network (encapsulation), and automatic filtering of data routing announcements. MNTP operates to connect the TCMs to each other and to the Central Collector, enabling Ethernet traffic transmission with arbitrary 802.1q labels, with a maximum transmission unit (MTU) size up to 2048 bytes when transmitting a user's traffic over a MSTNT network.

TCM (260) provides for controlling access to MSTNT tunnels from/to the Central Collector (FIGS. 2, 3) by automatically configuring tunnel access for each Autonomous System that implements the MSTNT system. TCMs can be configured as Regional Collectors, to function as a backbone for a user's MSTNT network, connecting all the control elements between geographic locations across the globe; Local Area Collectors, to enable traffic routing within a user's MSTNT network; and Reflectors, to act proxy devices to route traffic.

MPM (265) provides for the user to control access by user's devices to the MSTNT tunnels, thereby controlling data transfer between the user devices and the Local Area Collector.

The Platform Mobile Module (PMM) (270) controls MSTP tunnel access by Android^{™} OS-based mobile devices to transfer data via cellular networks.

PMM (270) is used to configure and manage MSTP connections (240) from Android devices.

The A-Loop Module (290), a software application that operates in the kernel and user space memory modules of the user Gateway Device analyzes network traffic transmitted from the user's network LAN ports to the MSTP tunnel in order to detect and block loops that appear in the network.

The B-Test Module (285), a client-server application for testing communication channels built using MSTNT technology, creates simplex and duplex load streams of UDP or TCP traffic of a certain bandwidth to measure the quality of data transmissions. Performance indicators that B- Test can measure include packet loss (separate for transmission and reception), latency, jitter (the variation in the latency), presence of packet reordering, and the maximum possible speed of data reception and/or transmission in the MSTNT tunnels.

The Monitoring and Management System (MMS) (220), a centralized management and monitoring platform with a user interface based on modern Web technologies (HTML5, SPA, Ajax, WebSockets), enables network administrators to centrally monitor the status and operation of communication channels created by the MSTNT technology, including, the results of different data transfer tests (e.g., Ping, B-Test), and other measures of network performance and status. For long-term (day or more) analysis, the MSTNT system will aggregate and visualize through the Web interface the quality of the subchannels of each tunnel (loss, latency fluctuations, traffic load). The Web interface controls and includes the ability to download, save, edit, and automatically create configuration files for both the server (collector) and client ends for each MSTP/MNTP tunnel. It is also possible to open a remote client device (shell) directly from the Web interface to promptly analyze incoming data (such as running a tcpdump traffic analyzer). MMS eliminates the need to monitor and manage, in certain versions of network equipment, at the routing hardware level. This alleviates the need for time-consuming network monitoring and management activity for networks that use older equipment or equipment from certain vendors.

The Central Collector (CC) (420, FIG. 2) is a central registry and controller, for storing and handling configuration details for users and their MSTNT networks. CC can assign abstracted and unique logical identifiers to each operator by their geographic area of service, each user autonomous MSTNT network (under each operator, if applicable), each TCM on the user's network, and to each device connected into the user's MSTNT network. The identifier can also support the identification of geography, network operators, and equipment manufacturers.

The Cryptocube (280) is a proprietary hardware equipment with integrated software, with several LTE/Wi-Fi/ethernet interfaces for connection to one or more designated networks. Cryptocube (280) includes: (1) The Platform Crypto-Module (PCM), a software module implemented on proprietary hardware equipment, to manage MSTP and MNTP tunnel access control from authorized user's mobile devices, to enable the devices to receive and transfer data via the designated networks and (2) The Management Crypto Mobile Platform (MCMP), a multiplatform software application implemented on a computer device , to administer PCM settings and to manage access to PCM from user mobile devices.

### Creating an Autonomous System for a User

MSTNT configures each network as an independent autonomous system connected to the global Internet (INTERNET). The autonomous system is built on top of any data transmission channel, whether it is a dedicated mobile cellular connection or the Internet.

The process of configuring and launching a new autonomous system for a user is as follows:
1) First, a unique user administration account is created in MMS.
2) The administrator sets various parameters to configure the MSTNT network, comprising one or more of Local Area Collectors, Regional Collectors, MCMP, and so on.
3) The administrator would also set parameters for the sub-channels, hot/cold reservation, and other configurable aspects of the MSTNT network.
4) When the administrator submits the settings, the MMS generates and assigns specific algorithmic-configuration keys to each of the devices comprising the Local Area Collectors, Regional Collectors, MCMP, and so on.
5) The MSTNT network is now prepared as an autonomous system for the user.

FIG. 4 is a schematic of the steps 1.1-1.7 to configure a user's device for connection to the user's autonomous network based on the MSTNT system. Step 1.1 includes an administrator configures a new device for use in an MSTNT autonomous system. Step 1.2 includes the MSTNT Central Controller assigning a unique MSTNT index ID and generating a configuration key. Step 1.3 has the central controller installing firmware with the configuration key. Step 1.4 includes the subscriber/user administrator creating one or more tunnels to associate with the device. Step 1.5 has the subscriber administrator configuring the tunnels for the application case.

In Step 1.6, the subscriber administrator selects instructions for the device to connect to a MSTNT area connector. In Step 1.7, the subscriber administrator selects sub-channels to provide data connectivity to the device.

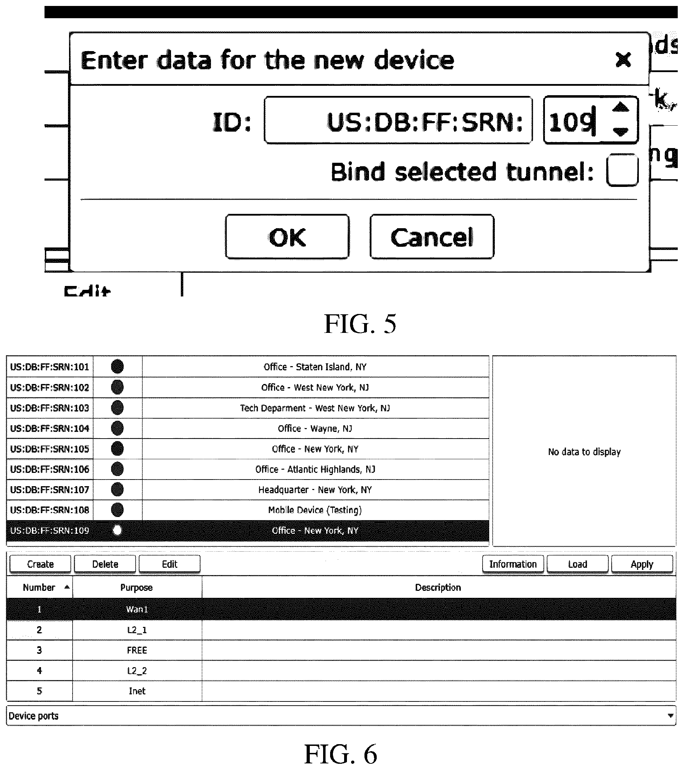

FIG. 5 depicts the configuration of an example user's device 10 for connection to a user's autonomous network based on the MSTNT system.

FIG. 6 depicts a configuration of an example network link 12 to connect the authorized user device to the user's autonomous network based on the MSTNT system.

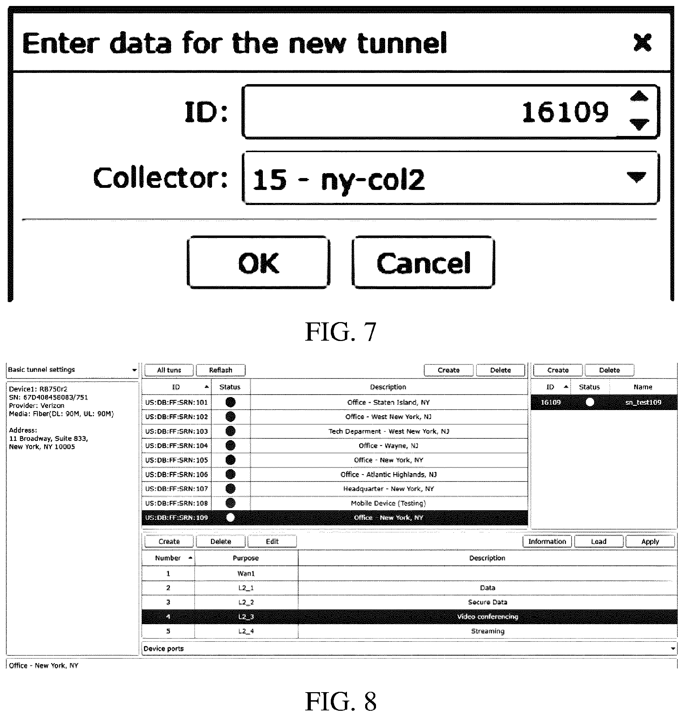

FIG. 7 depicts the configuration of an example MSTNT tunnel 14 to connect the authorized user device to the user's autonomous network based on the MSTNT system.

FIG. 8 depicts management of an example authorized user device 16 configured to connect through a MSTNT tunnel to an autonomous network based on the MSTNT system.

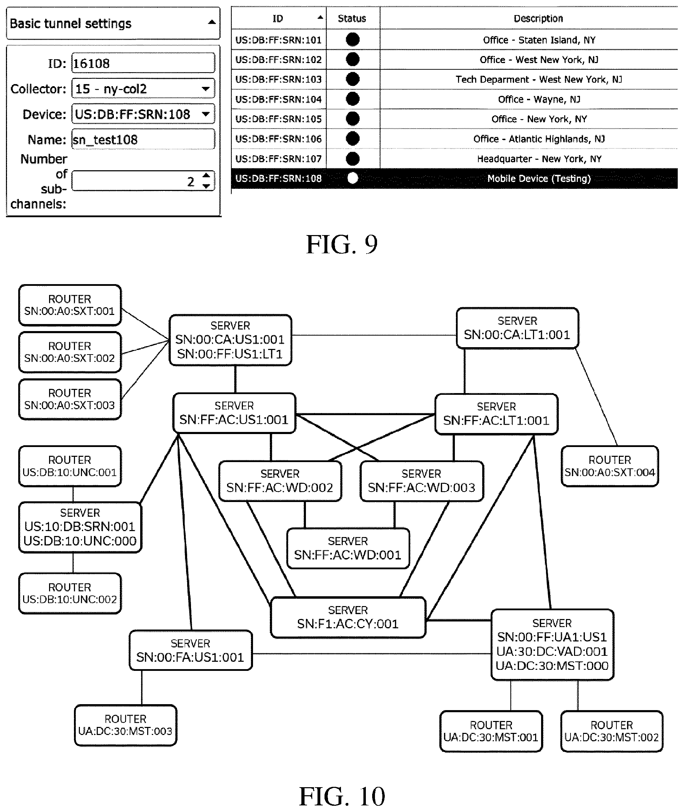

FIG. 9 depicts a configuration of an example basic tunnel setting 18 to connect a user device to the autonomous user's network.

FIG. 10 depicts an example user network configuration 20 involving MSTNT collectors.

### MSTNT Processing of Data Packets

A MSTNT network can be built on top of any data transmission channel, whether it is a dedicated mobile cellular connection or the Internet, abstracting routing technologies and physical devices and encrypting the data packets. In accordance with aspects of the present invention, MSTNT uses a packet header structure and abstracted address details, to route packet traffic across the network independent of the TCP/IP protocol. MSTNT enables the creation of logical tunnel connections with complete flexibility over the flow of data traffic, while ensuring that the order of delivery of isolated packages is maintained. It enables the creation of monolithic communication channels from multiple transport IP channels, summing up the bandwidth of the individual sub-channels.

### MSTP Protocol

MSTP is a Layer 1 (OSI) transport protocol to organize the tunneling of data packets for Layer 2 (Ethernet) or Layer 3 (IP) OSI levels. The UDP or ICMP (Ping) protocols are used as a transport environment for the MSTP protocol.

The MSTP protocol encrypts transmitted data through its own development algorithm on "fast" logical operations (xor, and, or, ...) that provides low performance requirements for the hardware platform on which it is launched. There is also the possibility (if there is support from the hardware platform) for MSTP to support added encryption under the standard aES 256-bit algorithm. To transmit useful data, the MSTP protocol can use an arbitrary number of different physical communication channels (e.g., up to 255), referred to as transport sub-channels or subchannels. Sub-channels are organized in transmission/reception (tx/rx) rings and each ring is set a number (with the ring number serving as a priority). The ring can contain both working (Online) sub-channels and nonperforming (OffLine) sub-channels. Sub-channels can have different bandwidth capacities.

In order for the client part of MSTP to be able to inform the server part of the work of the sub-channel, MSPT uses service synchronization packets. A synchronization packet generated by the client is to be accepted by the server and in response the server sends the client a packet indicating that the sub-channel is working. The client, having accepted such a packet, marks the sub-channel as working. If a single synchronization packet has not been accepted after a certain interval after the sub-channel is installed (Online) or the sub-channel is marked as it does not work (Offline), transmission of data through the sub-channel stops. MSTP allows each subchannel to set the waiting interval for synchronization packets, as well as their number until the sub-channel is working. As a matter of data transport, fast stable sub-channels are used first and only in case of failure will other sub-channels be used as backups (in order of descending their bandwidth and quality). At the same time, the time to switch to a backup feed is milliseconds (set by parameters for the sub-channel) or generally equals 0 (in the case of hot reservations).

Each of the sub-channels of the ring is divided into two logical sub-channels (reception - rx and transmission - tx). Every such sub-channel has a number. That is, the same sub-channel can be in ring number 2 for data transmission and in ring 5 to receive data. This allows MSTP to organize asynchronous data transmission (acceptance on one sub-channel, and transmission on others). As one example of such a situation, one-way satellite Internet connections can be considered, when reception is from a satellite and transmission is through a GPRS/3G/LTE mobile network. In default mode, if there are several operating sub-channels in the ring, the traffic (packets) for transmission between them is distributed equally. But it is possible to set quality of service criteria for each sub-channel. For example, one sub-channel can be set to transfer all the packets that were sent to it, while another one is set to transfer only 33%, yielding the remaining 66% to the next sub-channel in the ring that is Online.

It is also possible for MSTP to set a subordinate sub-channel for hot backup/mirroring purposes. In this case, the data packets transmitted through a sub-channel will be cloned and simultaneously transferred through the designated hot backup/mirroring sub-channel. The host will process the first packet that arrives through either sub-channel (in this example) and ignore the copy of the same packet that arrives through the other sub-channel. This dynamic feature of MSTP allows for significant improvement in the quality of communication, removing losses, minimizing latency, minimizing jitter, and getting zero-time switching to the backup channel.

It is also possible for MSTP to specify that n number of packets be transmitted through one sub-channel, then the next n packets go through a second sub-channel, and so on. In addition to enabling the distribution of traffic load between sub-channels with different bandwidth, MSTP's ability to transmit via multiple transport sub-channels provides a much higher degree of security than conventionally possible. For example, if 9,000 bytes of data is to be transferred between two points and there are three available sub-channels of communication. MSTP can be set to transmit the first block of 1500 bytes in encrypted form through the first sub-channel, the second block through the second, and so on until all the bytes have been successfully transferred. If a third party were to attempt to listen or probe, without authorization, the traffic on the first sub-channel, the party may only be able to try and listen and probe the first 1500 bytes. So, in addition to its use of encryption and virtual addresses, MSTNT actively tries to prevent unauthorized access to the full block of bytes in each transmission.

### MSTN Packet Header

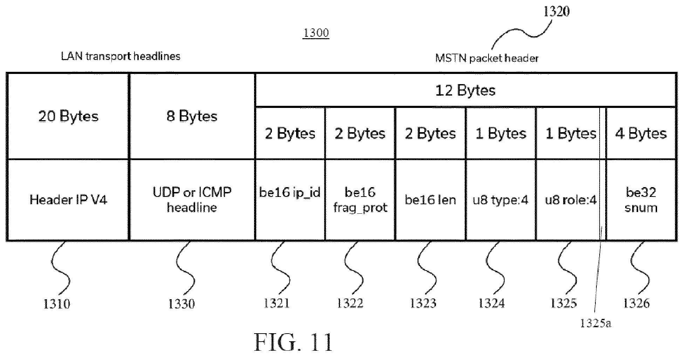

FIG. 11 depicts an illustrative MSTN header 1320 for an exemplar data packet 1300. The MSTN packet header enables MSTNT's system and method of packet processing. The packet header has the following structure, taking up 12 bytes: struct tunhdr {

```
 _be16 ip_id; // duplicate value from (ipv4 header). For fragmentation (1321).
```

```
 _be16 frag_prot; // unique id to protect fragmentation (1322).
```

```
 _be16 len; // total length (for fragmentation) (1323).
```

```
 _u8 type:4; // package type. Data or service (1324).
```

```
_u8 role:4; // role: 8-client, 0-server (1325).
```

```
 _u8 sub_chan_num; //the number of the subchannel (1325a).
```

```
         _be32 snum; // sequence number (to restore the order of packets on the peer side) (1326)
         };
```

```
     The fields are arranged in such a way that the necessary (e.g., atomicity, speed) alignment
     (e.g., memory alignment) is appropriate for the relevant processors.
```

### Method of software-defined virtual multi-service tunnel networking.

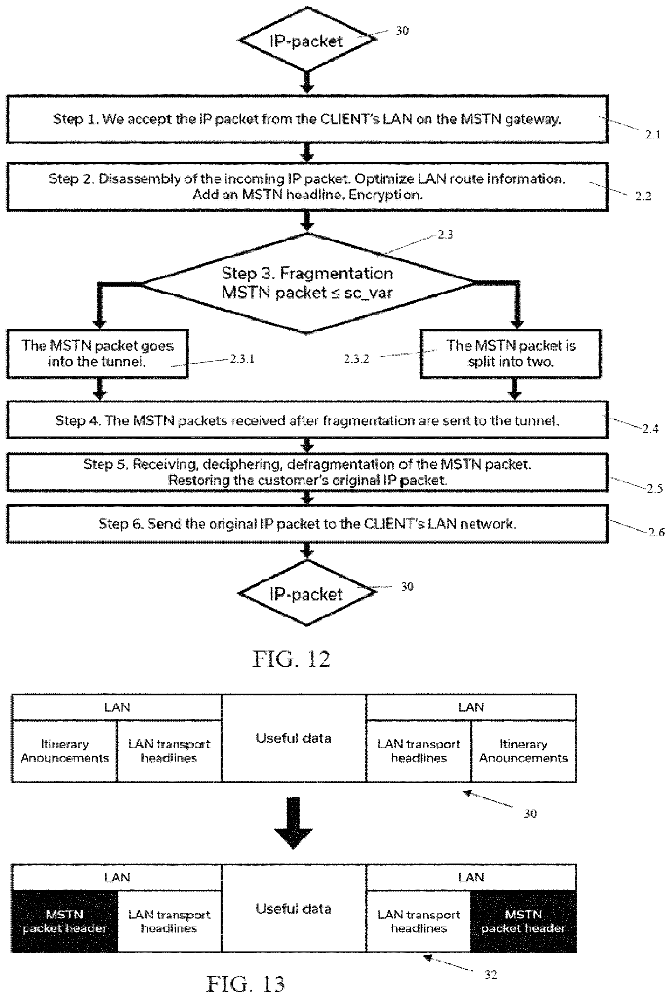

The MSTNT method comprises these following steps: receiving internet protocol packet (IP packet) at the Dispatch Point; the MSTN packet dispatchment to the logical tunnel; the MSTN packet receive at the destination; the IP packet delivery to the user. In addition to these steps, there usually are present other steps, which deal with the packet processing and fragmentation. One of the examples is shown in FIG. 12. FIG. 12 depicts the method by which a MSTNT tunnel processes an incoming data packet.

Referring to FIG. 12, Step 2.1: Receive IP Packet at Dispatch Point. MNTP accepts an IP packet from the user's LAN on the user's MSTNT gateway on the dispatch end. Step 2.2: Reconstitute IP packet as a MSTN packet. FIG. 13 depicts a schematic for MSTN packet handling. An IP packet 30 is disassembled by MNTP to optimize the LAN routing information. The MSTN packet header details are then added and the newly constituted packet is then encrypted if necessary. An MSTN packet 32 is assembled in such a way that it includes all the necessary route information for its delivery to the recipient after passing the MSTNT tunnel. The packet is received from the kernel, then the MSTP header (12 bytes) is added. Before passing through the core, the packet is cleared of irrelevant LAN headers. After adding the MSTP header details, the data is encrypted (using one of the encryption algorithms, depending on the structure and branching of the user's MSTNT network).

In FIG. 12, Step 2.3: Fragmentation. The size of the collected MSTN packet is analyzed for its compliance with the maximum transmission unit (MTU) specified in a MSTN tunnel parameter. If the packet size exceeds the specified MTU in the MSTN tunnel, it is split into two or more sub-packets in a fragmentation step. In one embodiment, if the packet size exceeds the sc_var (sub-channel variable) MTU (by default, it is 1500 bytes), then the packet is split (fragmented). A fragmented packet 32 includes two parts: the first part in Step 2.3.1 will include the MSTN tunnel detail, the transport header detail, and payload data, up to the allowed MTU size for that MSTN tunnel sub-channel, the second part in Step 2.3.2 will include the remainder of the data packet. Fragmentation can be performed either by the MSTP module or by the Linux kernel.

For fragmentation by the MSTP module (240), MSTNT employs a proprietary algorithm. Data about fragmentation, in this case, is transmitted not in the L3 header (IP header), but in the service fields of the MSTP header of the tunnel, of which the traffic routers on the network know nothing. Accordingly, the routers cannot determine the presence of fragmented traffic, providing, additional security to the data packets.

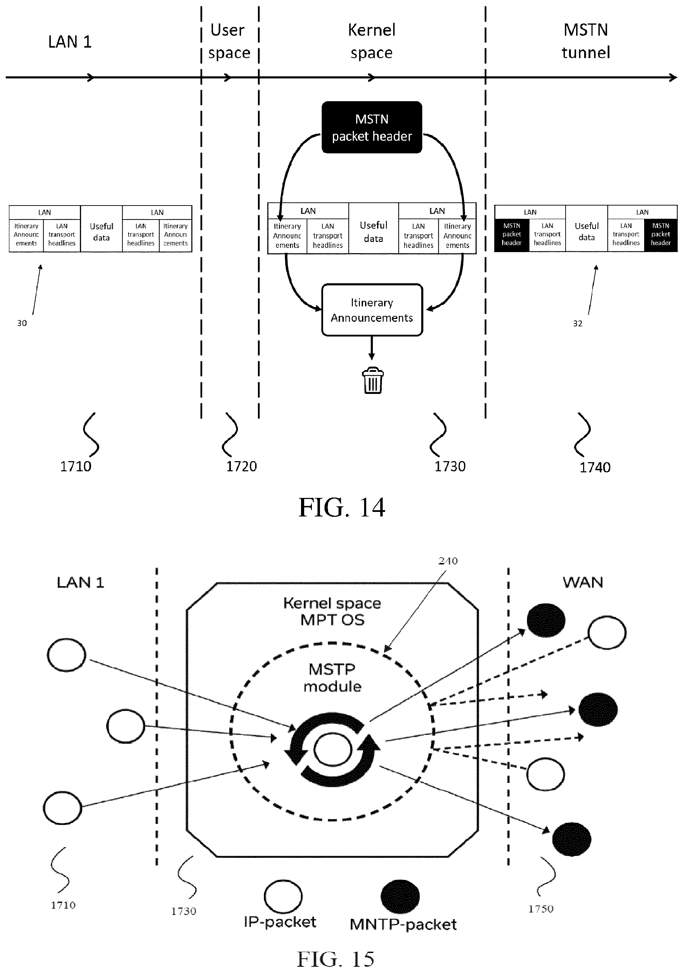

For fragmentation by a kernel module (1730, FIG. 14), while the standard fragmentation function can be performed, this method is not always preferred. This can be due to anomalies in the operation of the transport WAN network (Internet) or the deliberate blocking of fragmented IP traffic by network traffic operators in order to prevent the use of tunnels.

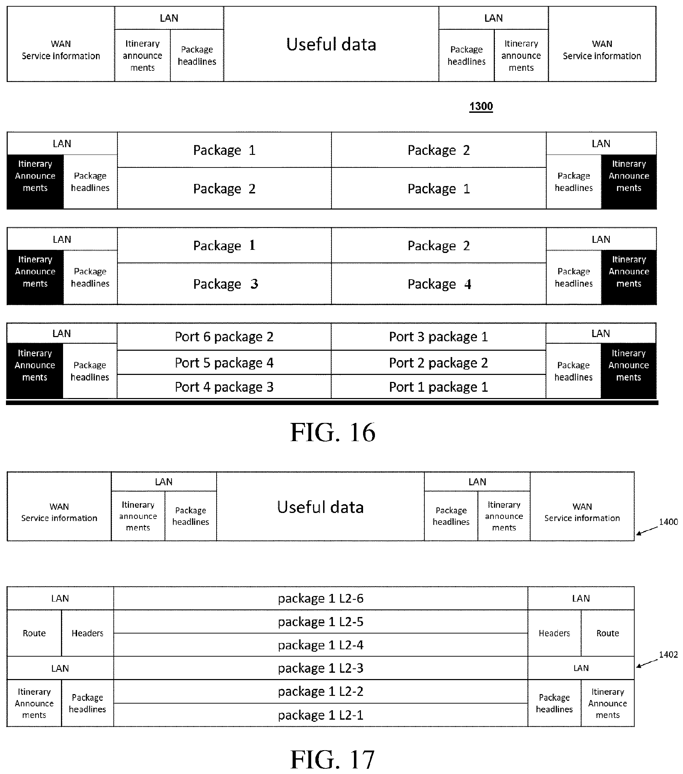

Step 2.4: Dispatch to Tunnel. MSTN packets received after fragmentation step are sent to the MSTN tunnel. Step 2.5: Packet Handling at Destination End. On the receiving side, everything is exactly the opposite. The MSTN packet is received and the MSTN header is removed from the MSTN packet. The packet is then checked for compliance with the specified packet addressing parameters. All necessary address pointers are updated for the user device that is the final destination. When the tun_vaOchecksum is enabled, the checksum is written (crc16) and the receiving side checks the validity of this value and discards packets with corrupted data. The user's original IP packet is now restored and ready for final delivery. FIG. 16 depicts the MSTN header with checksum support for an exemplar data packet 1300. Step 2.6: Delivery. The restored original IP packet is delivered to the user's LAN network on the receiving end.

A packet sequence recovery algorithm ensures that the sequence of packets at dispatch is restored at the destination. If the packets are delivered to the receiving side without a queue, duplicates (DUPs) are discarded.

### Kernel space

FIG. 14 depicts a schematic for the MSTNT handling of packets in the kernel space (1730) of an operating system. A MSTP tunnel (1740) (main and auxiliary modules) works in kernel space (1730). All processing of transmitted and received data, e.g., from LAN1 (1710) is also performed in kernel space. This is an important factor for system performance. Only the mstp_cmd utility works in userspace (1720). It uses the /dev/mstp (character special file 244/0) file and the ioctl mechanism to send commands to the MSTP modules and receive data from them. Exchange mechanisms are standard for Linux (secure copying from kernel space to user space and back). This is the end of the work in userspace.

FIG. 15 illustrates the processing of IP and MNTP packets by the MSTP module (240) between LAN 1 1710 and WAN 1750 in the kernel space 1730 of MPT OS.

### Virtual Tunnels

FIG. 16 depicts a packet/sub-packets 1300 for an embodiment of the present invention wherein a single data communication channel is dynamically configured by MSTN into multiple virtual MSTN tunnels, each of which can then be assigned to carry different packet streams from one or more services. In FIG. 16, an example embodiment of the present invention is depicted wherein a single data communication channel, whether wired cable or cellular, between a transmission point and a receiving end, can be dynamically configured by MSTN to represent multiple MSTN tunnels, each of which can then be assigned to carry different packet streams, fragmented or unfragmented, from one or more services (e.g., VoIP, web browsing, video streaming, transmission of a digital X-ray, and transmission of an insurance charge, in the case of a medical care facility as the MSTNT user). MSTN can then combine packets sent via different streams and coming through different MSTN tunnels to re-create the original data signal that was transmitted with minimal latency, jitter, and packet loss, but with improved speed, better capacity utilization, and enhanced security. MSTNT can also enable the user to configure different quality of service (QoS) measures for packets based on their application service type, which can be specified using the applicable port identifier in the network connection.

FIG. 17 depicts an embodiment of the present invention wherein a single data communication channel (1400) is dynamically configured by MSTN into multiple virtual MSTN tunnels (1402) (packages L2 1-6), each of which can then be assigned to carry different packet streams from one or more local area networks.

In FIG. 17, an example embodiment of the present invention is depicted wherein a single data communication channel, whether wired cable or cellular, between a transmission point and a receiving end, can be dynamically configured by MSTN to represent multiple MSTN tunnels, each of which can then be assigned to carry different packet streams, fragmented or unfragmented, from one or more services (e.g., VoIP, web browsing, video streaming, transmission of a digital X-ray, and transmission of an insurance charge, in the case of a medical care facility as the MSTNT user) from multiple local area networks. In essence, a single channel is transformed into multiple VLANs. In the embodiment shown in FIG. 17, six Layer 2 channels (packages L2 1-6) are shown, but in principle MSTN can support up to 4,092 channels at the same time. MSTNT will use the tag associated with each packet to route it through the appropriate channel. At the receiving end, MSTN can then route each packet to its appropriate LAN destination. In contrast to a current solution such as MPLS, which will need six MPLS lines to perform the same data transport service, MSTN is able to perform the same routing function and carry the same workload using just one channel. In addition, MSTN will transfer the data packets with minimal latency, jitter, and packet loss, but with improved speed, better capacity utilization, and enhanced security. MSTNT can also enable the user to configure different quality of service (QoS) measures for packets based on their local area network, which can be specified using the applicable Layer 2 (OSI) identifier in the network connection.

### Summation of Bandwidth

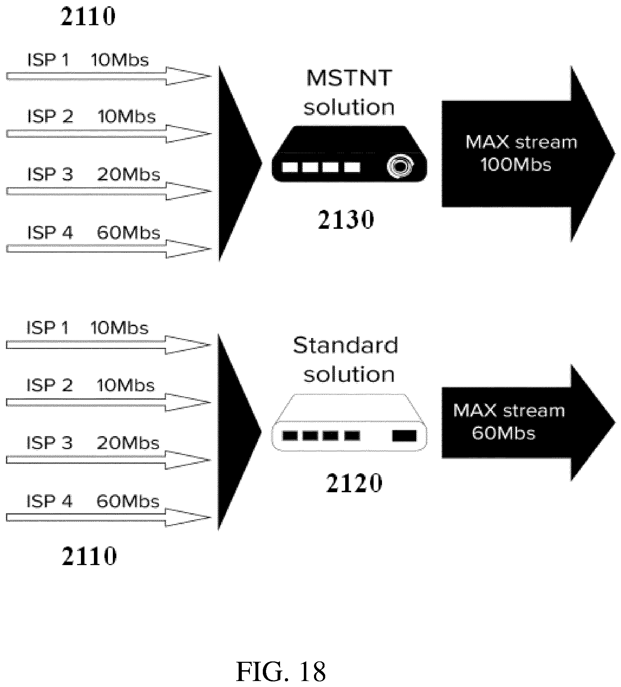

FIG. 18 depicts the transfer of data using a MSTNT summation method (2130) in comparison to alternative methods (2102). In contrast to existing tunnel-forming systems, MSTNT provides the possibility of combining several sub-channels (2120) in the summation of bandwidth mode and in the reservation mode (whether in hot or cold setting). This summation of bandwidth of channels guarantees preservation of the packets sequence - packets leave the tunnel in the same order that they enter it. MNTP can transparently sum the transport channels and protect the data packets as they are transmitted even over an unsecured network, with automatic filtering of routing instructions and Ethernet traffic transmission with arbitrary 802.1q tags and a maximum transmission unit size up to 8,192 bytes, but future improvements are contemplated.

### Improved Failover Routing Performance

By virtue of its novel tunneling system and data packet processing method, MSTNT provides superior and highly secure fault tolerance compared to alternative methods. Channels and tunnels can be pre-configured to be in cold mode, ready to be activated and used whenever necessary.

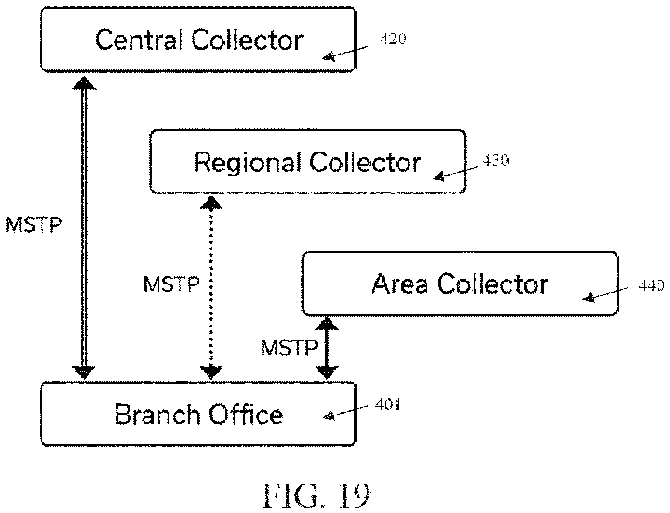

FIG. 19 depicts the MSTNT method to provide fault tolerant fail-over data connectivity. In normal operation, as depicted by thick solid lines with arrows, a user branch office (401) logically connects to an Area Collector (440), which in turn transmits the information received from the branch office to the Regional Collector (430) as previously depicted in FIGS. 2 and 3. In turn, the Regional Collector 430 transmits the data to the Central Collector (420) as previously depicted also in FIGS. 2 and 3. The user's central or head office (420) and the branch office are thus connected through MSTNT connections. If there is a disruption in the connection to the Local Collector or the Local Collector fails, rather than having the whole network stop functioning to the detriment of the Branch Office, MSTNT will switch the data traffic flow from the Branch Office directly to the Regional Collector as depicted by thin dashed line with arrows. This happens automatically in the same data session, so there is no interruption in data flow. The same automatic switching will happen in case the Regional collector fails. If for any reason both the Local and Regional collectors fail, then the Branch Office will automatically connect directly to the Head Office Central Collector as depicted by the double line with arrows, without dropping the packet.

To ensure global fault tolerance, MSTNT also provides a proxy-mirroring mode, which enables the creation of chains of servers by directing control of traffic routing outside specified networks or geographies. In combination with MSTNT's ability to dynamically configure different subchannels, it becomes possible to split the relevant data stream into sub-data streams and transmit them through different networks or geographies. For example, MSTNT would enable the direction of a traffic route from USA (Carrier Ul) Germany (Carrier Gl) France (Carrier FI) Italy (Carrier 11) USA (Data Group) to USA (Carrier 2) Canada (Carrier Cl).

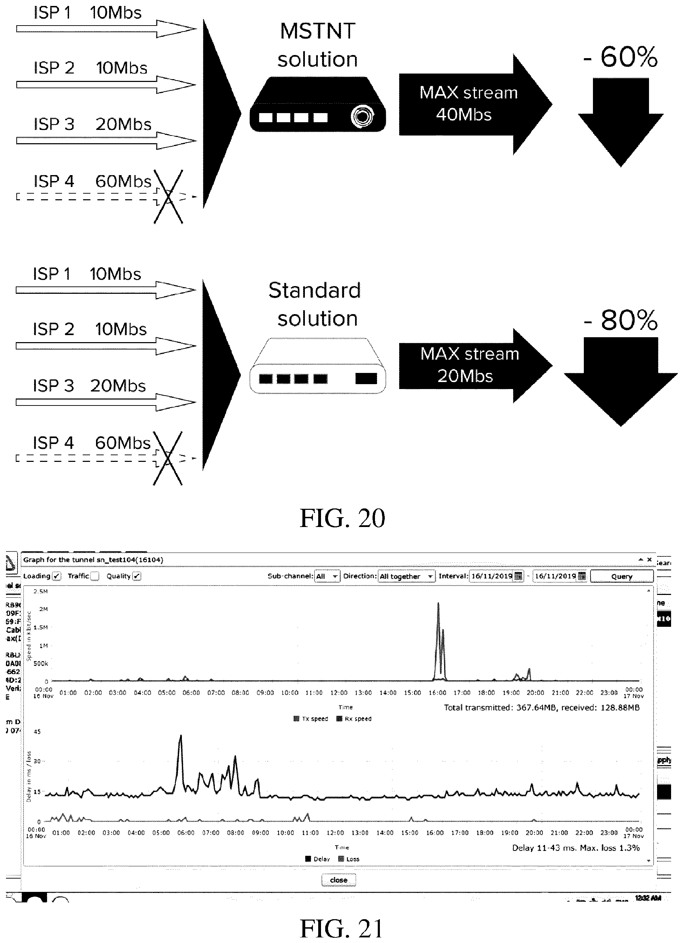

FIG. 20 depicts the transfer of data using a MSTNT summation method, illustrating that MSTNT novel summation method can continue to function despite any failure in connectivity of any sub-channel, with the summation covering all available sub-channels.

### Loop Protection

The A-Loop Module (290, FIG. 1) detects loops in a MSTNT network using a unique Linux kernel implementation of both passive and active loop detection methods. The A-Loop Module uses a Linux kernel module for its (core) Layer 2 ebtables firewall. This assures significantly improved performance. In the passive method, A-Loop uses multicast and broadcast packet counters received. When a set limit is exceeded; that is, when the loop has already gained a certain strength (packet flow), a loop is detected. In the active loop detection method, A-Loop transmits a special Ethernet packet of a certain type every N seconds (N is set to 5 seconds by default) and analyzes response characteristics.

### Dynamic Traffic Reflectors in the Tunnel

MSTNT uses dynamic data traffic reflectors to ensure the best path between two end points. It can also use other protocols such as ICMP, UDP, and TCP, to route traffic. The use also of hot backup channel and data integrity checks allows MSTNT to always deliver packets by the shortest tunnel path in terms of data integrity and security.

### Flow Control in MSTNT Tunnels

MSTNT includes B-test, a system and a method (1) for comprehensive inspection and monitoring of the quality of the MSTNT tunnels in real time, (2) for evaluating the possibility of dynamically combining several sub-channels into a single solid communication channel through a summation method, (3) for creating tunnels through the single summed connection. MSTNT then uses the tunnels to transmit the useful payload portion of data traffic through OSI model Layer 2 (Ethernet) or Layer 3 (IP), minimizing data packet loss. As a practical matter, since Internet connectivity is relatively cheap and decreasing in cost, to configure a tunnel with a capacity of 50 megabits, MSTNT makes it easy to take four Internet channels with a capacity of 30 megabits each and using its summation method create a hot spare that can provide an ultra-stable 50 megabits capacity tunnel. When traffic flows increase, the 50-megabit tunnel ensures that dropped packets, latency, and jitter are minimized.

### Dynamic Traffic Routing

Another significant aspect of the present invention includes that MSTNT can enable network operators and users to route traffic dynamically to minimize latency and to maximize capacity utilization, among other network management objectives. For example, if traffic appears to build up along a network path, MSTNT can be configured to dynamically redirect the path using TCMs configured as reflectors. This is in addition to the hot reservation option to have standby sub-channels. For even greater resilience, MSTNT can enable users to use a mode of mirroring (or scrolling), creating chains from servers to route data packets in specified geographic ways and then breaking down the data packets into sub-streams of data packets that can be transmitted via different paths and then reassembled at the destination end.

### CryptoCube

Another significant aspect of the present invention is that MSTNT can enable hardware devices built on x86, MIPS or AIMS processors, to be transformed into MSTNT-ready network devices. An exemplar embodiment of this feature is the CryptoCube (280, FIG. 1). In an example embodiment, the CryptoCube is a standard router operating on a X86 processor, configured to send/receive data packets to external devices via one or more cellular antenna connections. Using an algorithm specific for this transmission modality, MSTNT can configure the CryptoCube to send/receive MSTN packets, bringing all the attributes and benefits of MSTN packet processing to a mobile router, thereby extending the systems and methods of the present invention to mobile cellular device connections.

### Bandwidth Capacity Utilization

In current technologies, bandwidth capacity in network connections can be used up by service features like tunnels and encryption. A significant and novel aspect of the present invention is that MSTNT can enable use of tunnels for packet transmission with minimal bandwidth overhead. In conventional technologies, tunnels can consume significant bandwidth, sometimes up to 30% more, for each pack transmitted. This is inefficient use of network capacity and drives up the cost of network ownership. By contrast, MSTNT's ability to combine the capacity of multiple available sub-channels results in only about a 10% bandwidth cost from use of tunnels, leaving more of the available bandwidth for transmission of the useful data payload.

### Multiple Encryption

All modern software applications use encryption. Encryption is inexpensive, and encryption of data in transit is becoming standard practice. A significant aspect of the present invention is that MSTNT can enable multiple encryption on packet transmission with minimal network resource cost.

For example, common MPLS Layer 2 (OSI) channels routing data packets for applications with encryption will have only about 30-35% of the theoretical bandwidth capacity for useful payload transmission. The remainder is taken up by the encryption methods. By contrast, MSTNT can use the same legacy channel, but implement its encryption services with only a 10-15% overhead, leaving the remainder 85-90% of bandwidth capacity for useful payload transmission.

Most tunnel-based network applications use the IPsec protocol to authenticate and encrypt data packets to provide secure encrypted communication between two devices over an IP network. It finds use in VPNs. But, in many instances, encryption is done twice, wasting bandwidth (as noted above) and CPU, with no advantage. By contrast, MSTNT employs the kernel space of the MST OS to perform its encryption step, which enables a double encryption layer with minimal use of CPU. In addition, MSTNT performs encryption and decryption steps of useful data only at the first and last points of each MSTNT connection, which also leads to efficiency in use of network resources.

### Layer 2 Encryption

Unlike with general software-defined WAN solutions, MSTNT adds a proprietary Layer 2 - Ethernet encryption. The Layer 2 encryption does not consume additional bandwidth. It works on the kernel level of the router's OS, avoiding the need to employ vulnerable IP addresses provided by the Internet provider. Instead, MSTNT employs its proprietary network address assignment mechanism, which makes a MSTNT network practically inaccessible for DDoS and other IP-based network attacks.

### Performance Measurement and Analysis

The MSTNT Btest module (285) passes N random data streams at a given speed. On the receiving side, the MNTP module examines the throughput and loss. Also, it analyzes the order in which the test packets arrive at the destination, to evaluate any violation of the order sequence. The test transmissions can be in UDP or TCP sessions. The MSTNT implementation of BTest has several unique features: it supports multithreading in UDP, it adjusts speeds correctly, it performs through NATs, and it can measure losses correctly.

### Monitoring and Reporting

A significant aspect of the present invention is that MSTNT can enable users to monitor the health and performance of their networks in real-time.
1) Current solutions introduce a five second overhead cost to network monitoring because network administrators have to integrate multiple network monitoring hardware to try and perform end-to-end monitoring. As a result of this integrated, multi-vendor solutions approach, there is inherent added latency in the process. By contrast, MSTNT has real-time visibility at the physical and logical levels on an end-to-end basis, so all monitoring is on a real-time basis without added latency.
2) Current solutions are limited in their ability to monitor inside of tunnels. By contrast, MSTNT comprises of a built-in mechanism for comprehensive and real-time monitoring of tunnel quality. Accordingly, monitoring data includes information about the health of the tunnels.\

In case of any network fault, the MMS system can then notify the user's designated network administration staff to enable them to identify and resolve the fault.

FIG. 21 illustratively depicts that real-time monitoring using MMS of the key performance indicators for a MSTN connection can be performed. Both download and upload performance characteristics can be measured and monitored at the sub-channel level using MSTNT MMS.

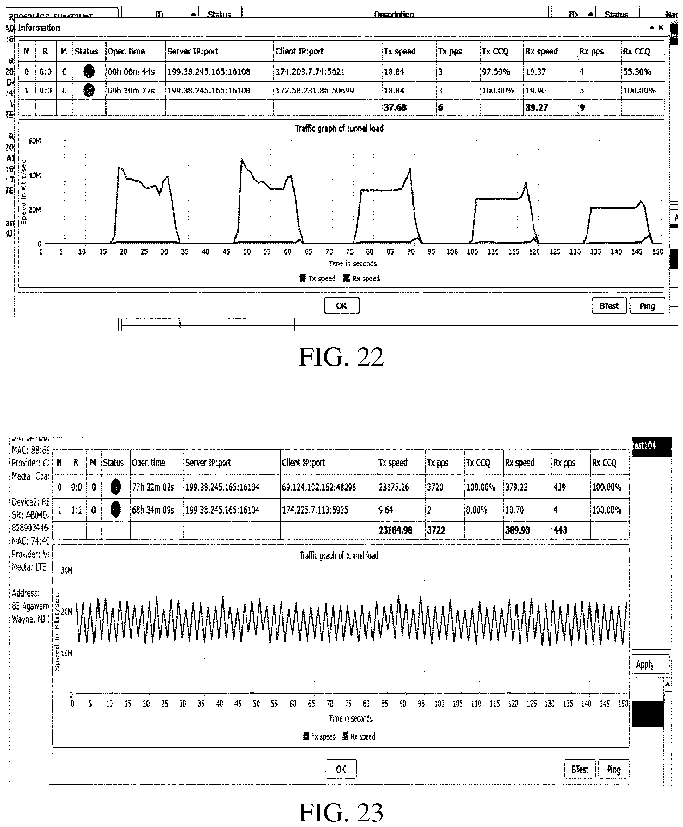

FIG. 22 depicts real-time monitoring using MMS of the key performance indicators of multiple MSTN sub-channels in hot mode. Note that both data is transmitted through both subchannels operating in summation mode.

FIG. 23 depicts real-time monitoring using MMS of the key performance indicators of multiple MSTN sub-channels, contrasting hot and cold modes. Note that one sub-channel has weak connectivity, yet MSTNT routes data without delay through the sub-channel with connectivity.

Key performance parameters can include, e.g., minimum latency; minimum jitter; increased throughput; maximum beneficial use of all available network connection capacity; minimum loss of packets during transmission; superior data transmission speed; enhanced data security; centralized network management; greater ease of network administration; lower cost of network administration; and ability to work on top of any type of data channel connection; compatible with hardware from any manufacturer, new or legacy; unlimited scalability across a user's network; compatibility with any Internet service provider globally, among others.

### Functional Characteristics of MSTNT Packet Handling

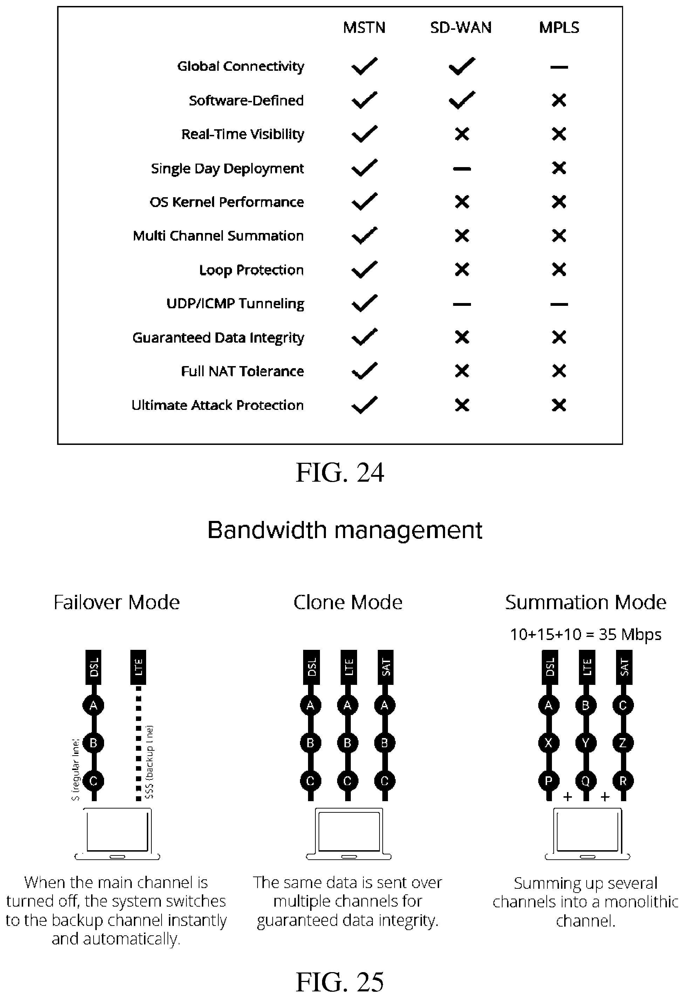

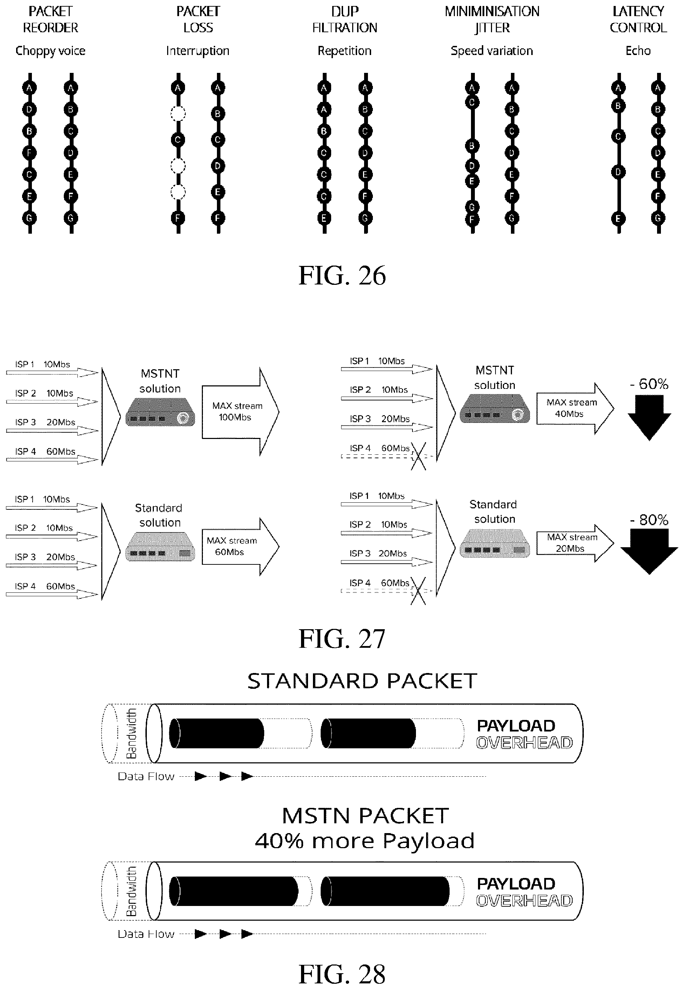

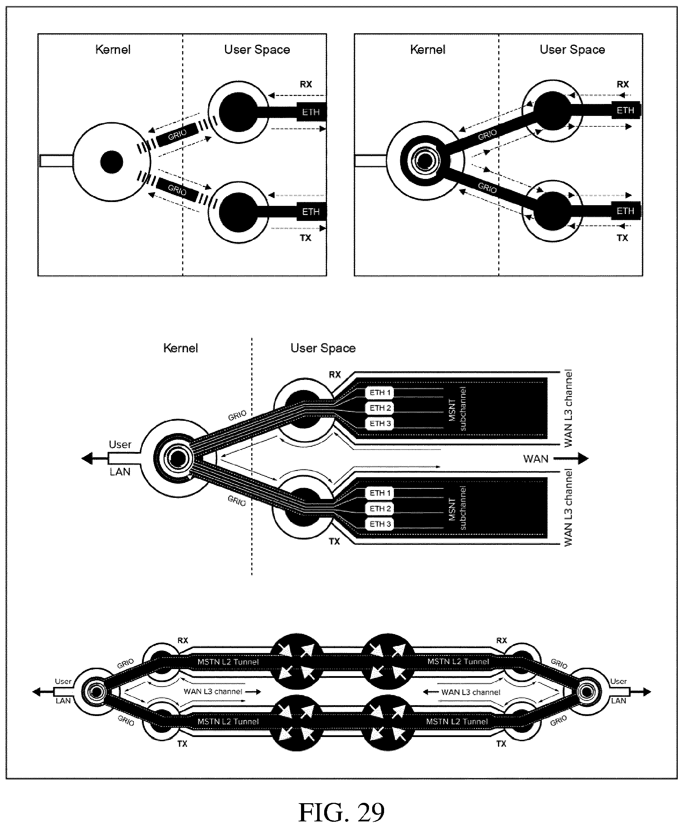

FIG. 24 through FIG. 29 depict summary details and illustrative aspects of MSTNT capabilities that solve challenges experienced by network operators and enterprise administrators today when deploying current solutions in accordance with aspects of the present invention. FIG. 24 depicts comparative characteristics.

### Application of MSTNT to Diverse Network Application

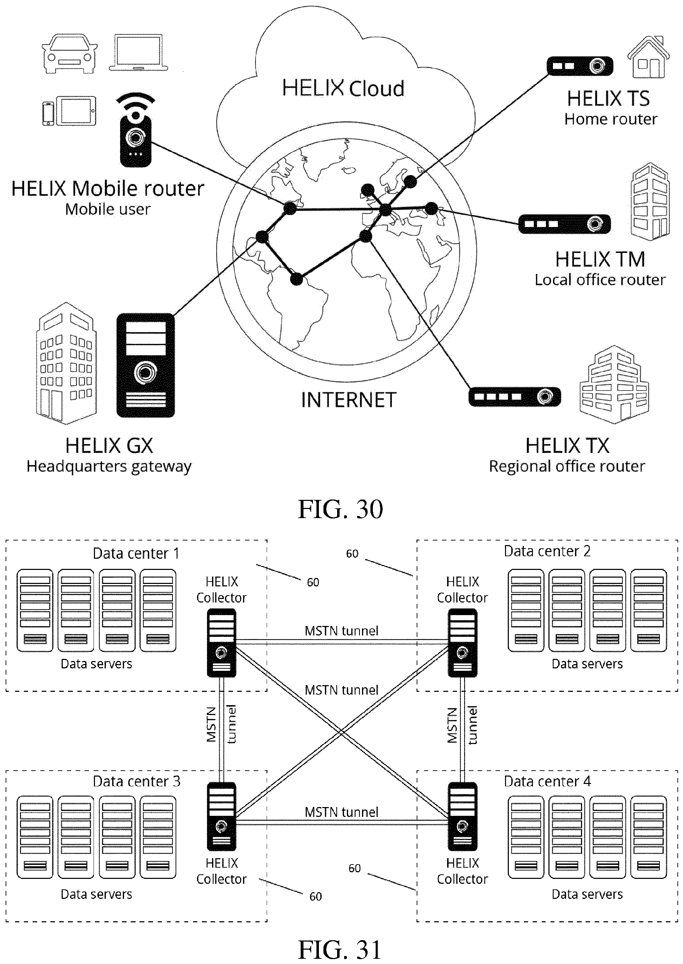

FIG. 30 through FIG. 41 depict the application of MSTNT to the data network architecture and functional needs in various application contexts.

FIG. 30 depicts an example embodiment of the application of MSTNT to WAN showing a mobile user (Helix mobile router), headquarters (GX) gateway, home router (Helix TS), local office router (Helix TM), regional office router (Helix TX), etc. communication over the Internet and interacting with a Helix Cloud. Many enterprises use WANs based on earlier generations of networking technologies when bandwidth was expensive and monolithic applications supported business needs that were slow to change. Expensive equipment and certified engineers were required to manage and evolve these WANs. They are now facing a changed business reality, with data-intensive applications, mobile connectivity, unified communications, and application programming interfaces are driving dynamic cloud applications that evolve continuously. To meet these changed demands, companies are looking for secure, reliable, and scalable WAN capabilities. MSTNT can be deployed as a subscription-based network-as-a-service to service these and other WAN needs.

FIG. 31 depicts an example embodiment of the application of MSTNT to data centers 60. Business demands on data centers are growing continuously as data-intensive applications, mobile connectivity, unified communications, smart decisioning tools, and time-sensitive business needs, among other applications, add to the traditional business productivity and enterprise resource planning applications. To meet these growing demands, companies are looking for secure, reliable, and scalable cloud technologies and virtualized applications in place of on-premises data centers and networking management. MSTNT can be deployed as a subscription-based network-as-a-service to service these and other data center networking needs.

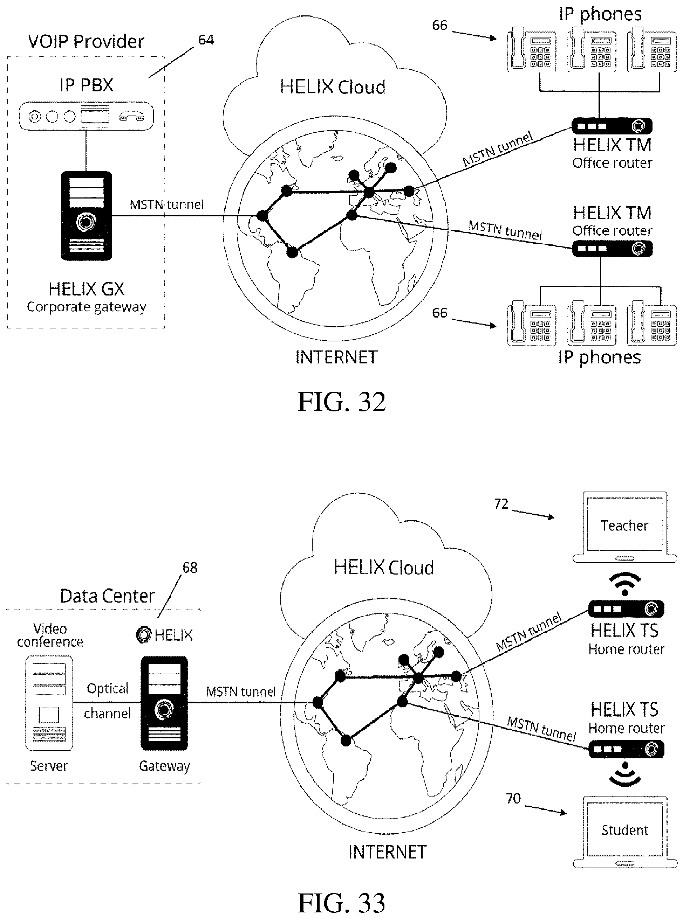

FIG. 32 depicts an example embodiment of the application of MSTNT to VOIP networks. For example, a VOIP provider 64 can communicate over the Internet and interact with a Helix Cloud with IP phones 6. For businesses looking to leverage cloud technologies for their voice, video, and data communications, their legacy WANs may not be able to meet the performance, scalability, and security requirements of the cloud applications. Replacing the WAN may not be a practical solution. MSTNT can be deployed as a subscription-based network-as-a-service to service these and other VOIP network needs.

FIG. 33 depicts an example embodiment of the application of MSTNT to streaming media networks where data centers 68 communication over the Internet and interact with the Cloud with user stations 70, 72. Media and entertainment companies are transforming their business models from traditional analog distribution to file-based streaming networks. This transformation is being powered by moving to networks that can support file-based content production, secure cloud- based collaborative workflows, and secure distribution through mobile applications. This transformation is placing increasing demand on bandwidth, the quality of user experience, and secure connections with users globally. MSTNT can be deployed as a subscription-based network- as-a-service to service these and other streaming media networking needs.

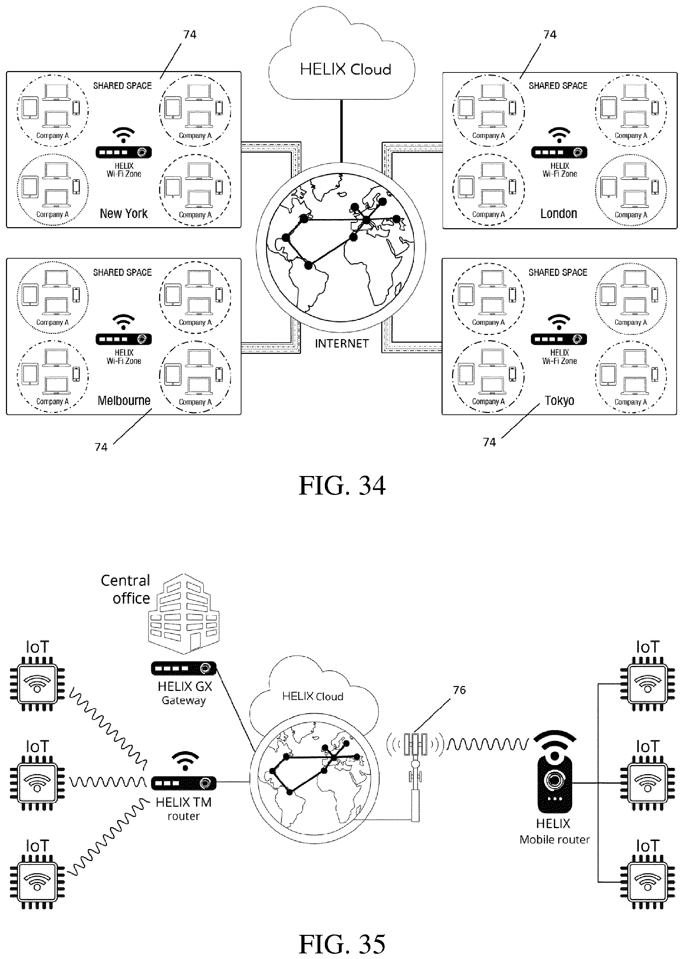

FIG. 34 depicts an example embodiment of the application of MSTNT to shared space networks 74. Corporate workforces are increasingly mobile and connected, leading to an *always on, business anywhere* model. The same networking technologies are serving as a catalyst for new commercial real estate models, lowering the barriers between potential tenants and real estate owners. Shared workplace or co-working spaces have emerged as collaborative office space models for young ventures, for the on-demand needs of telecommuting and mobile workforces, contractors, and even corporate satellite offices. These shared spaces have to meet the networking demands of the corporate clients, with their diverse data-intensive applications, unified communication tools, business productivity applications, and enterprise resource planning applications. To meet these growing demands, shared services operators are looking for secure, reliable, and scalable cloud technologies and virtualized applications. MSTNT can be deployed as a subscription-based network-as-a-service to service these and other shared space networking needs.

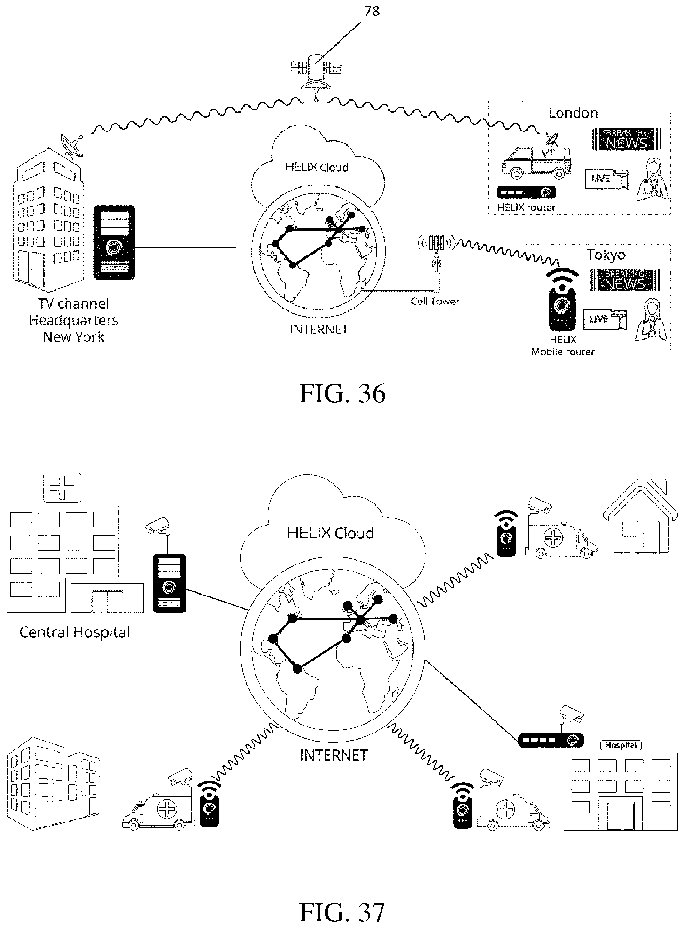

FIG. 35 depicts an example embodiment of the application of MSTNT to Internet of Things (IOT) networks. As IoT finds increasing presence in a variety of operational contexts, new demands are being placed on the data network. As IoT devices multiply, so also is the demand for unique device addresses. Headless IoT devices require new approaches to provisioning, monitoring, and security. IoT devices (IOT) must have the ability to connect to heterogenous networks (e.g., satellite 78 (FIG. 36), cell tower 76, etc.) and to communicate with each other. To meet these growing and unique demands fueled by IoT devices, companies are looking for secure, reliable, and scalable networking capabilities that can support emerging sensors and controls. MSTNT can be deployed as a subscription-based network-as-a-service to service these and other IOT networking needs.

FIG.36 depicts an example embodiment of the application of MSTNT to media networks covering live events. Venue owners, event organizers, broadcasters, and network operators are continuously looking for new ways to offer enhanced services and immersive experiences for large scale live sports, entertainment, expos/conferences, and other public events. Live 4K video quality, customizable multi-angle viewcasts, AI-enabled video recognition, virtual reality applications, and immersive advertising are just some of the many emerging applications. The structural features of large public venues can make data networking a challenge, forcing the use of cables in many cases. In turn, this leads to difficult network deployment, fixed camera positioning, and high costs. With LTE networks, if the compute power is a few hops away, it can lead to poor user experience. 5G solutions are expected to address some of these challenges in the coming years. To meet these growing objectives, event-stakeholders are looking for flexible, scalable, and reliable alternatives. MSTNT can be deployed as a subscription-based network-as- a-service to service these and other live media event networking needs.

FIG. 37 depicts an example embodiment of the application of MSTNT to healthcare applications. Digital healthcare products and services, in the form of electronic health records, wearables, remote diagnostics / telemedicine, and powerful healthcare analytics, are growing at a rapid pace, with their promise of improved diagnosis and treatment at a lower cost. Such growth is placing enormous loads on the data networks of medical facilities, which were designed to previously handle administrative tasks such as patient registration, billing, and personnel data. Most such facilities operate data networks that are based on proprietary network technologies that are difficult and costly to manage and scale. As healthcare IT begins to transform, attention must be given to data reliability, regulatory compliance requirements, and data security risks. MSTNT can be deployed as a subscription-based network-as-a-service to service these and other healthcare sector networking needs.

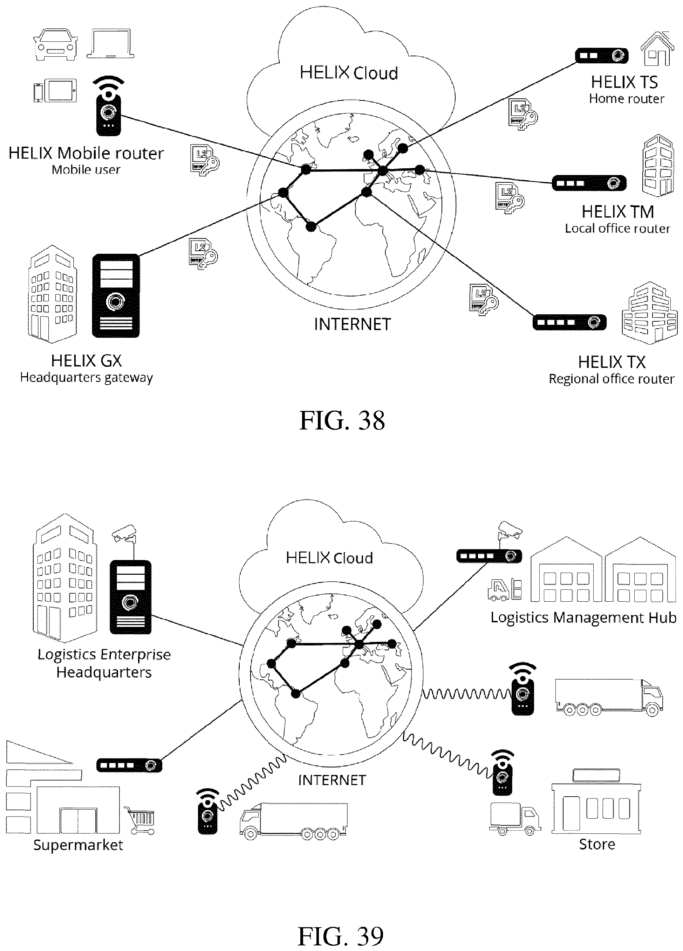

FIG. 38 depicts an example embodiment of the application of MSTNT to business assurance applications. As more aspects of industrial, business, organizational, and consumer life become digital, organizations face a greater risk from digital disruptions to their operations, whether those disruptions are unexpected or malicious. A resilient digital business continuity architecture and a hardened data security model are essential to addressing these challenges. Whether an organization is a large one with a complex distributed backend or a small one with limited resources to implement a custom solution, a practical digital business assurance model would have to support uninterrupted connectivity, reliable performance, and ultra-secure data networks. MSTNT can be deployed as a subscription-based network-as-a-service to service these and other networking needs driven by business assurance objectives.

FIG. 39 depicts an example embodiment of the application of MSTNT to transportation networks. There is increasing interest in high speed communication services for transportation systems. The interest arises from diverse application cases with varying quality of service needs: communications with the engineer/driver; closed-circuit television video for safety/security surveillance; richer passenger information systems, provisioning of passenger WiFi connectivity; and, more recently, the advent of autonomous vehicle navigation. However, the lack of quality- of service features in many solutions limits their ability to carry both mission-critical and nonmission critical data traffic in the same network reliably. A key requirement is that these services be able to deliver guaranteed quality of service in dynamically varying data traffic conditions. To achieve this, data backhaul has to accommodate dynamic configuration with mobility management driven directly from a local area network controller. MSTNT can be deployed as a subscription-based network-as-a-service to service these and other networking needs in the transportation sector.

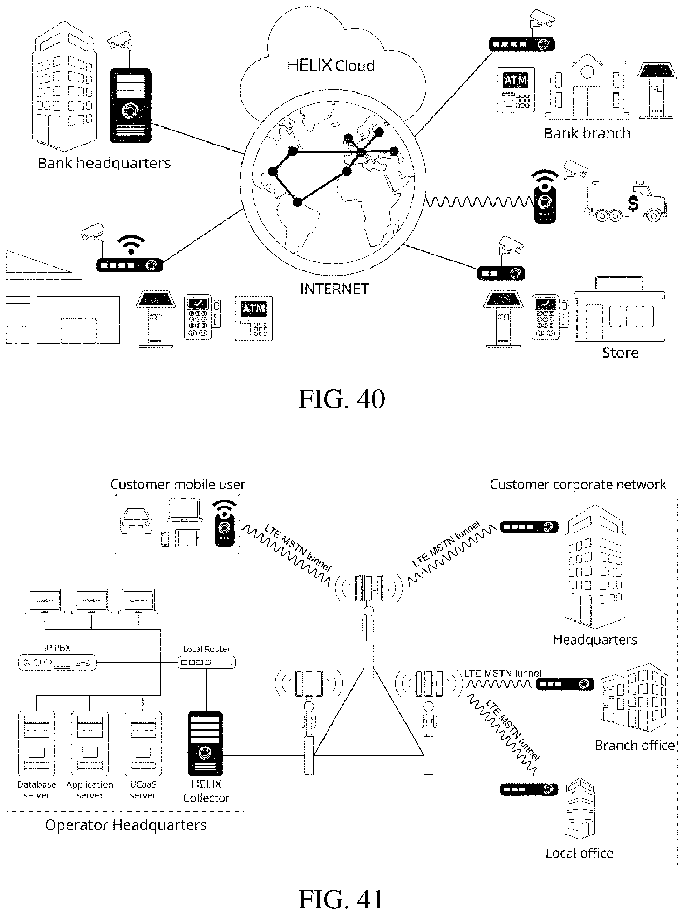

FIG. 40 depicts the application of MSTNT to financial services applications. Financial technology or FinTech innovations represent a strategic frontier for financial services companies. Cloud technologies and mobile applications are driving marketing and customer services closer to each prospect and customer, alleviating the need for prospects and customers to come into branch offices to complete transactions. These applications demand low-latency, high-reliability, secure data connections, and rich personalized experiences for distributed trading, banking, insurance, and other financial services applications. To meet these growing demands, financial companies are looking for secure, reliable, and scalable cloud technologies and virtualized applications in place of on-premises data centers and branch office systems. MSTNT can be deployed as a subscription-based network-as-a-service to service these and other networking needs in the financial services sector.

FIG. 41 depicts an example embodiment of the application of MSTNT to service the hotspot connectivity needs of any enterprise in any location. Technology is driving a rapid increase in remote and distributed business models, where geographic location and business hours are no longer constraints on the scope and scale of business. Office workers may telecommute or work from co-working spaces, IoT bots may collect and transmit data from distributed areas, field teams may gather and process sensitive data (e.g., agriculture yield, medical information) away from metro areas, and data connectivity can be provided on-demand in areas with limited fixed connectivity (e.g., convention centers). Connectivity that is reliable, secure, and configurable for the specific data needs of a use case, is critical for these application cases. MSTNT can be deployed as a subscription-based mobile network-as-a-service to service hotspot connectivity needs of enterprises.

The MSTNT technology could be used for the data packets' transportation from digital devices or their networks to a user and vice versa through network data services. The methods could be used for the data packets' transportation for all known connection types, such as data dispatchment, digital telephony, video conferencing and other. The use of the MSTNT method comprises these main steps:
- the internet protocol packet (IP packet) is received at the Dispatch Point;
- the MSTN packet is dispatched to the logical tunnel;
- the MSTN packet is received at the destination;
- the IP packet is delivered to the user.

Other computer system architectures capable of executing software and interacting with a database and users may also be used to practice this invention. It is noted that in the embodiments of the methods of the present invention discussed above, the steps may occur in a different order or steps may be omitted or added as long as the overall workflow of the methods is not frustrated. For example, when configuring a fault tolerance architecture, a reflector may not be used in the alternative data path. All possible permutations and combinations of the above steps and any additional steps are also envisioned.

It is envisioned also that any feature or element that is positively identified in this description may also be specifically excluded as a feature or element of an embodiment of the present invention in claims pertaining to that embodiment.

Aspects of the present invention described herein may be practiced in the absence of any element or elements, limitation or limitations which is not specifically disclosed herein. Thus, for example, in each instance herein, any of the terms "comprising," "consisting essentially of" and "consisting of" may be replaced with either of the other two terms. The terms and expressions employed herein are used as terms of description and not of limitation, and there is no intention the use of such terms and expressions of excluding any equivalents of the features shown and described or portions thereof, but it is recognized that various modifications are possible within the scope of the invention claimed. Thus, it should be understood that although the present invention has been specifically disclosed by preferred embodiments and optional features, modifications, and variations of the concepts disclosed herein may be used by those skilled in the art, and that such modifications and variations are considered to be within the scope of this invention as defined by claims to the invention.

## Claims

1. A multi-service tunnel networking technology "MSTNT" system, which uses multiple
internet service providers and forms logical tunnels within one physical communication channel, the system comprises:
a tunnel module (230), which performs summing of data transport channels, enables data protection when transmitted over an unsecure network or manages Layer 2 Ethernet tunnels over Wide Area Networks "WAN"; and
a management and monitoring system "MMS" module (220), which enables network administrators to centrally monitor the status and operation of communication channels created by MSTNT technology;
wherein the data packets' transportation is permitted from digital devices or their networks to a user and vice versa through network data services, **characterized in that,** for data transmission, the multi-service tunnel protocol "MSTP", which operates at a kernel level of the Multi-Platform Tunnel Operating System "MPT OS", employs
a plurality of different physical communication sub-channels, which are structured into distinct groups known as transmission/reception "tx/rx" rings, where each of these tx/rx rings is assigned a unique identifier number that facilitates the ordered management and prioritization of data flow within the network.

2. The MSTNT system according to claim 1, wherein the MSTNT system additionally comprises an A-Loop module, which includes a software application that operates in kernel and user space memory modules, receives and analyzes network traffic transmitted from the subscriber's network local area network "LAN" ports to a multi-service tunnel protocol "MSTP" tunnel in order to detect and block loops that appear in the network.

3. The MSTNT system according to claim 1, wherein the MSTNT system additionally comprises a B-Test module (285) including a client-server application which creates simplex and duplex load streams of user datagram protocol "UDP" or transmission control protocol "TCP" traffic of a bandwidth to measure quality of data transmissions, and is used for testing communication channels built using MSTNT technology.

4. The MSTNT system according to claim 1, wherein the MSTNT system additionally comprises a Cryptocube (280) including proprietary hardware equipment with integrated software, with several interfaces for connection to one or more designated networks, which comprises:
a platform crypto-module "PCM" (275) including a software module implemented on proprietary hardware equipment to manage MSTP and multi-network transport protocol "MNTP" tunnel access control from authorized subscriber mobile devices, to enable the devices to receive and transfer data via the designated networks; and
a management crypto mobile platform "MCMP" including a multiplatform software application implemented on a computer device, to administer PCM settings and to manage access to PCM from subscriber mobile devices.

5. The MSTNT system according to claim 1, wherein the tunnel module comprises:
a tunnel collector module "TCM" (420), which is used for controlling access to MSTNT tunnels from/to a central collector by automatically configuring tunnel access for each autonomous system that implements the MSTNT system;
a multi-platform module "MPM" (265), which provides for a user an access to the MSTNT tunnels by user devices, thereby controlling data transfer between the user devices and a local area collector;
a platform mobile module "PMM" (270), which is used to configure and manage MSTP connections from all devices to transfer data via cellular networks; and
a platform crypto module "PCM" including a software module, which manages MSTP and MNTP tunnel access control from authorized subscriber mobile devices and enables the authorize subscriber mobile devices to receive and transfer data via the designated networks.

6. The MSTNT system according to claim 5, wherein the TCM is configured as one or more of:
a regional collector (430) to function as a backbone for a subscriber's MSTNT network, connecting all the control elements between geographic locations across the globe;
a local area collector (440) to enable traffic routing within a subscriber's MSTNT network;
a mobile segment collector (450); and/or a reflector to act as a proxy device to route traffic.

7. The MSTNT system according to claim 1, wherein the MSTNT system further has a central collector "CC" module including a central registry and a controller, used for storing and handling configuration details for subscribers and their MSTNT networks, which is integrated with or independent of the MMS module.

8. The MSTNT system according to claim 1, wherein the autonomous MSTNT system is built on top of a data transmission channel, which allows abstracting routing technologies and physical devices and encrypting the data packets, the data transmission channel including a dedicated mobile cellular connection or the Internet.

9. The MSTNT system according to claim 1, wherein the MSTNT system employs an operating system including a multi-platform tunnel operating system "MPT OS", installed on any telecommunication equipment based on X86, ARM, or MIPS processors.

10. The MSTNT system according to claim 1, wherein the MSTNT system employs cloud infrastructure for docketing of network architecture.

11. A multi-service tunnel networking technology "MSTNT" method, which uses multiple
internet service providers and forms logical tunnels within one physical communication channel,
wherein the method comprises:
receiving an internet protocol packet "IP packet" at a dispatch point; dispatching a MSTN packet to a logical tunnel;
receiving the MSTN packet at a destination; and
delivering the IP packet to a user where the IP data packets' transportation from digital devices or their networks to the user and vice versa is through network data services,
**characterized in that,** the dispatching the MSTN packet is performed by multiple transport IP channels, summing up bandwidth of individual sub-channels, and wherein the dispatching is executed at the kernel level of the MTP OS.

12. The MSTNT method according to claim 11, wherein the method uses MSTN packet fragmentation for the transportation of the data packets via the logical tunnel, and an order of delivery of isolated packages is maintained after the MSTN packet fragmentation, and the steps of dispatching and receiving the MSTN packet.

13. The MSTNT method according to claim 11, wherein:
IP packets are converted as MSTN packets before the transportation of the data packets via the logical tunnel; and
IP packets are reconstituted from MSTN packets after the transportation of the data packets via the logical tunnel.

14. The MSTNT method according to claim 11, wherein the method uses central management of an entire network infrastructure.

15. The MSTNT method according to claim 11, wherein the method automatically performs constant monitoring of quality of the logical tunnel connections and a load on them; when a channel in use becomes offline or is not working properly for a defined period of time, the channel is automatically changed into a new online channel; reservation of sub-channels is performed for future use, based on current MSTN packet dispatchment to the logical tunnel and future needs.

16. The MSTNT method according to claim 11, wherein data sent through the logical tunnel is encrypted.

17. The MSTNT method according to claim 11, wherein the method performs filtration of MSTN packet duplicates.

18. The MSTNT method according to claim 11, wherein the method is employed for connection types including data dispatchment, digital telephony, and/or video conferencing.

## Patentansprüche

1. Ein System für eine softwaredefinierte virtuelle Mehrdiensttunnelvernetzung ("MSTNT"), das mehrere Internetdienstanbieter verwendet und logische Tunnel innerhalb eines einzigen physikalischen Kommunikationskanals bildet, wobei das System umfasst:
ein Tunnelmodul (230), das die Summierung von Datenübertragungskanälen durchführt, den Datenschutz bei der Übertragung über ein unsicheres Netzwerk ermöglicht oder Ethernet-Tunnel der Schicht 2 über Weitverkehrsnetze ("WAN") verwaltet; und
ein Modul eines Verwaltungs- und Überwachungssystems ("MMS") (220), das Netzwerkadministratoren die zentrale Überwachung des Zustands und des Betriebs der durch die MSTNT-Technologie erzeugten Kommunikationskanäle ermöglicht;
wobei der Transport von Datenpaketen von digitalen Geräten oder deren Netzwerken zu einem Benutzer und umgekehrt über Netzdaten-dienste ermöglicht wird,
**dadurch gekennzeichnet, dass**
für die Datenübertragung das Mehrdiensttunnelprotokoll ("MSTP"), das auf Kernel-Ebene des Multi-Plattform-Tunnel-Betriebssystems ("MPT OS") arbeitet, eine Vielzahl unterschiedlicher physikalischer Kommunikations-Subkanäle verwendet, welche in getrennte Gruppen strukturiert sind, die als Sende-/Empfangs-Ringe ("tx/rx") bezeichnet werden, wobei jedem dieser tx/rx-Ringe eine eindeutige Kennnummer zugewiesen ist, die die geordnete Verwaltung und Priorisierung des Datenflusses innerhalb des Netzwerks erleichtert.

2. Das MSTNT-System nach Anspruch 1, wobei das MSTNT-System zusätzlich ein A-Loop-Modul umfasst, das eine Softwareanwendung enthält, die in Kernel- und Benutzerspeicherbereichen arbeitet, Netzwerkverkehr empfängt und analysiert, der von den Ports des lokalen Netzwerks ("LAN") des Teilnehmernetzes zu einem Tunnel des Mehrdiensttunnelprotokolls ("MSTP") übertragen wird, um Schleifen zu erkennen und zu blockieren, die im Netzwerk auftreten.

3. Das MSTNT-System nach Anspruch 1, wobei das MSTNT-System zusätzlich ein B-Test-Modul (285) umfasst, das eine Client-Server-Anwendung enthält, welche Simplex- und Duplex-Lastströme von Datenverkehr gemäß dem User Datagram Protocol ("UDP") oder dem Transmission Control Protocol ("TCP") einer bestimmten Bandbreite erzeugt, um die Qualität von Datenübertragungen zu messen, und das zum Testen von Kommunikationskanälen verwendet wird, die mithilfe der MSTNT-Technologie aufgebaut sind.

4. Das MSTNT-System nach Anspruch 1, wobei das MSTNT-System zusätzlich einen Cryptocube (280) umfasst, der eine proprietäre Hardwareausstattung mit integrierter Software beinhaltet und mehrere Schnittstellen zur Verbindung mit einem oder mehreren vorgesehenen Netzwerken aufweist, wobei der Cryptocube Folgendes umfasst:
ein Plattform-Kryptomodul ("PCM") (275), das ein Softwaremodul umfasst, welches auf proprietärer Hardware implementiert ist, um die Zugriffskontrolle auf MSTP- und Multi-Network Transport Protocol ("MNTP")-Tunnel von autorisierten mobilen Teilnehmergeräten zu verwalten, damit diese Geräte Daten über die vorgesehenen Netzwerke empfangen und übertragen können; und
eine kryptografische Verwaltungsplattform für mobile Geräte ("MCMP"), die eine multiplattformfähige Softwareanwendung umfasst, die auf einem Computergerät implementiert ist, um die PCM-Einstellungen zu verwalten und den Zugriff auf das PCM von mobilen Teilnehmergeräten aus zu steuern.

5. Das MSTNT-System nach Anspruch 1, wobei das Tunnelmodul Folgendes umfasst:
ein Tunnel-Sammelmodul ("TCM") (420), das zur Steuerung des Zugriffs auf MSTNT-Tunnel von bzw. zu einem zentralen Sammelpunkt verwendet wird, indem der Tunnelzugriff für jedes autonome System, das das MSTNT-System implementiert, automatisch konfiguriert wird;
ein Multi-Plattform-Modul ("MPM") (265), das einem Benutzer mittels Benutzergeräten den Zugriff auf die MSTNT-Tunnel ermöglicht und dadurch den Datentransfer zwischen den Benutzergeräten und einem lokalen Sammelpunkt steuert;
ein Plattform-Mobilmodul ("PMM") (270), das zur Konfiguration und Verwaltung von MSTP-Verbindungen sämtlicher Geräte verwendet wird, um Daten über Mobilfunknetze zu übertragen; und
ein Plattform-Kryptomodul ("PCM"), das ein Softwaremodul umfasst, welches die Zugriffskontrolle auf MSTP- und MNTP-Tunnel von autorisierten mobilen Teilnehmergeräten verwaltet und den autorisierten mobilen Teilnehmergeräten ermöglicht, Daten über die vorgesehenen Netzwerke zu empfangen und zu übertragen.

6. Das MSTNT-System nach Anspruch 5, wobei das TCM als eines oder mehrere der folgenden Elemente konfiguriert ist:
ein regionaler Sammelpunkt (430), der als Rückgrat für das MSTNT-Netzwerk eines Teilnehmers fungiert und alle Steuerelemente zwischen geografisch verteilten Standorten weltweit verbindet;
ein lokaler Sammelpunkt (440), der das Routing des Datenverkehrs innerhalb des MSTNT-Netzwerks eines Teilnehmers ermöglicht;
ein mobiler Segment-Sammelpunkt (450); und/oder ein Reflektor, der als Proxy-Gerät zur Weiterleitung von Datenverkehr dient.

7. Das MSTNT-System nach Anspruch 1, wobei das MSTNT-System ferner ein zentrales Sammelmodul ("CC") umfasst, das ein zentrales Register und einen Controller beinhaltet, welche zur Speicherung und Verwaltung von Konfigurationsdaten für Teilnehmer und deren MSTNT-Netzwerke verwendet werden und entweder in das MMS-Modul integriert oder davon unabhängig sind.

8. Das MSTNT-System nach Anspruch 1, wobei das autonome MSTNT-System auf einem Datenübertragungskanal aufgebaut ist, welcher die Abstrahierung von Routing-Technologien und physischen Geräten sowie die Verschlüsselung der Datenpakete ermöglicht, wobei der Datenübertragungskanal eine dedizierte mobile zellulare Verbindung oder das Internet umfasst.

9. Das MSTNT-System nach Anspruch 1, wobei das MSTNT-System ein Betriebssystem verwendet, das ein Multi-Plattform-Tunnel-Betriebssystem ("MPT OS") umfasst, welches auf jeglicher Telekommunikationsausrüstung installiert ist, die auf X86-, ARM- oder MIPS-Prozessoren basiert.

10. Das MSTNT-System nach Anspruch 1, wobei das MSTNT-System eine Cloud-Infrastruktur zur Protokollierung der Netzwerkarchitektur verwendet.

11. Ein Verfahren der softwaredefinierten virtuellen Mehrdiensttunnelvernetzung ("MSTNT"), das mehrere Internetdienstanbieter verwendet und logische Tunnel innerhalb eines einzigen physikalischen Kommunikationskanals bildet, wobei das Verfahren Folgendes umfasst:
den Empfang eines Internetprotokollpakets ("IP-Paket") an einem Verteilungspunkt; das Senden eines MSTN-Pakets an einen logischen Tunnel;
den Empfang des MSTN-Pakets an einem Zielort; und
die Zustellung des IP-Pakets an einen Benutzer, wobei der Transport der IP-Datenpakete von digitalen Geräten oder deren Netzwerken zum Benutzer und umgekehrt über Netzdienste erfolgt,
**dadurch gekennzeichnet, dass**
das Senden des MSTN-Pakets durch mehrere IP-Transportkanäle erfolgt, wobei die Bandbreite einzelner Subkanäle summiert wird, und wobei das Senden auf Kernel-Ebene des MPT OS ausgeführt wird.

12. Das MSTNT-Verfahren nach Anspruch 11, wobei das Verfahren eine Fragmentierung von MSTN-Paketen für den Transport der Datenpakete über den logischen Tunnel verwendet, und wobei eine Reihenfolge der Zustellung isolierter Pakete nach der Fragmentierung der MSTN-Pakete sowie während der Schritte des Sendens und Empfangens der MSTN-Pakete aufrechterhalten wird.

13. Das MSTNT-Verfahren nach Anspruch 11, wobei:
IP-Pakete vor dem Transport der Datenpakete über den logischen Tunnel in MSTN-Pakete umgewandelt werden; und
IP-Pakete nach dem Transport der Datenpakete über den logischen Tunnel aus MSTN-Paketen wiederhergestellt werden.

14. Das MSTNT-Verfahren nach Anspruch 11, wobei das Verfahren eine zentrale Verwaltung der gesamten Netzwerkinfrastruktur verwendet.

15. Das MSTNT-Verfahren nach Anspruch 11, wobei das Verfahren automatisch eine kontinuierliche Überwachung der Qualität der logischen Tunnelverbindungen und deren Auslastung durchführt; wenn ein verwendeter Kanal offline geht oder während eines definierten Zeitraums nicht ordnungsgemäß funktioniert, wird der Kanal automatisch durch einen neuen Online-Kanal ersetzt; eine Reservierung von Subkanälen erfolgt für die zukünftige Nutzung, basierend auf dem aktuellen Versand von MSTN-Paketen in den logischen Tunnel und dem zukünftigen Bedarf.

16. Das MSTNT-Verfahren nach Anspruch 11, wobei Daten, die durch den logischen Tunnel gesendet werden, verschlüsselt sind.

17. Das MSTNT-Verfahren nach Anspruch 11, wobei das Verfahren eine Filterung von Duplikaten der MSTN-Pakete durchführt.

18. Das MSTNT-Verfahren nach Anspruch 11, wobei das Verfahren für Verbindungstypen einschließlich Datenversand, digitale Telefonie und/oder Videokonferenzen eingesetzt wird.

## Revendications

1. Un système de réseautage de tunnel multi-service "MSTNT", utilisant plusieurs fournisseurs de services Internet et formant des tunnels logiques au sein d'un seul canal de communication physique, le système comprenant:
un module de tunnel (230), qui effectue la sommation de canaux de transport de données, permet la protection des données lorsqu'elles sont transmises sur un réseau non sécurisé ou gère des tunnels Ethernet de Couche 2 sur des réseaux étendus "WAN" (Wide Area Networks); et
un module de système de gestion et de surveillance "MMS" (220), qui permet aux administrateurs réseau de surveiller de manière centralisée l'état et le fonctionnement des canaux de communication créés par la technologie MSTNT;
dans lequel le transport de paquets de données depuis des dispositifs numériques ou leurs réseaux vers un utilisateur, et inversement, est permis via des services de données réseau,
**caractérisé en ce que**,
pour la transmission de données, le protocole de tunnel multi-service "MSTP", qui fonctionne au niveau du noyau du système d'exploitation de tunnel multi-plateforme "MPT OS", emploie une pluralité de sous-canaux de communication physique distincts, lesquels sont structurés en groupes distincts appelés anneaux de transmission/réception "tx/rx", chacun de ces anneaux tx/rx se voyant attribuer un identifiant unique facilitant la gestion ordonnée et la priorisation du flux de données au sein du réseau.

2. Le système MSTNT selon la revendication 1, dans lequel le système MSTNT comprend en outre un module A-Loop, lequel comprend une application logicielle fonctionnant dans les modules de mémoire en espace noyau et en espace utilisateur, recevant et analysant le trafic réseau transmis depuis les ports du réseau local "LAN" du réseau de l'abonné vers un tunnel du protocole de tunnel multi-service "MSTP", afin de détecter et de bloquer les boucles apparaissant dans le réseau.

3. Le système MSTNT selon la revendication 1, dans lequel le système MSTNT comprend en outre un module B-Test (285) comprenant une application client-serveur qui génère des flux de charge simplex et duplex de trafic du protocole de datagramme utilisateur "UDP" ou du protocole de contrôle de transmission "TCP" d'une largeur de bande donnée afin de mesurer la qualité des transmissions de données, et qui est utilisé pour tester des canaux de communication construits à l'aide de la technologie MSTNT.

4. Le système MSTNT selon la revendication 1, dans lequel le système MSTNT comprend en outre un Cryptocube (280) comprenant un équipement matériel propriétaire avec un logiciel intégré, doté de plusieurs interfaces pour la connexion à un ou plusieurs réseaux désignés, lequel comprend:
un module crypto de plate-forme "PCM" (275) comprenant un module logiciel mis en œuvre sur un équipement matériel propriétaire pour gérer le contrôle d'accès aux tunnels MSTP et au protocole de transport multi-réseaux "MNTP" à partir de dispositifs mobiles d'abonnés autorisés, afin de permettre à ces dispositifs de recevoir et de transmettre des données via les réseaux désignés; et
une plate-forme mobile de gestion cryptographique "MCMP" comprenant une application logicielle multiplateforme mise en œuvre sur un dispositif informatique, pour administrer les paramètres du PCM et gérer l'accès au PCM à partir des dispositifs mobiles des abonnés.

5. Le système MSTNT selon la revendication 1, dans lequel le module de tunnel comprend:
un module collecteur de tunnel "TCM" (420), qui est utilisé pour contrôler l'accès aux tunnels MSTNT depuis/vers un collecteur central en configurant automatiquement l'accès aux tunnels pour chaque système autonome mettant en œuvre le système MSTNT;
un module multi-plateforme "MPM" (265), qui permet à un utilisateur d'accéder aux tunnels MSTNT au moyen de dispositifs utilisateur, contrôlant ainsi le transfert de données entre les dispositifs utilisateur et un collecteur de réseau local;
un module mobile de plate-forme "PMM" (270), qui est utilisé pour configurer et gérer les connexions MSTP depuis tous les dispositifs afin de transmettre des données via des réseaux cellulaires; et
un module crypto de plate-forme "PCM" comprenant un module logiciel, qui gère le contrôle d'accès aux tunnels MSTP et MNTP à partir de dispositifs mobiles d'abonnés autorisés et permet à ces dispositifs mobiles autorisés de recevoir et de transmettre des données via les réseaux désignés.

6. Le système MSTNT selon la revendication 5, dans lequel le TCM est configuré comme un ou plusieurs des éléments suivants:
un collecteur régional (430), destiné à fonctionner comme dorsale pour le réseau MSTNT d'un abonné, en connectant tous les éléments de contrôle entre des emplacements géographiques à travers le monde;
un collecteur de réseau local (440), destiné à permettre le routage du trafic au sein du réseau MSTNT d'un abonné;
un collecteur de segment mobile (450); et/ou un réflecteur destiné à agir en tant que dispositif mandataire pour router le trafic.

7. Le système MSTNT selon la revendication 1, dans lequel le système MSTNT comprend en outre un module de collecteur central "CC" comprenant un registre central et un contrôleur, utilisé pour stocker et gérer les détails de configuration des abonnés et de leurs réseaux MSTNT, lequel est intégré au module MMS ou indépendant de celui-ci.

8. Le système MSTNT selon la revendication 1, dans lequel le système MSTNT autonome est construit au-dessus d'un canal de transmission de données, lequel permet d'abstraire les technologies de routage et les dispositifs physiques, et de chiffrer les paquets de données, le canal de transmission de données comprenant une connexion cellulaire mobile dédiée ou l'Internet.

9. Le système MSTNT selon la revendication 1, dans lequel le système MSTNT utilise un système d'exploitation comprenant un système d'exploitation de tunnel multi-plateforme "MPT OS", installé sur tout équipement de télécommunication basé sur des processeurs X86, ARM ou MIPS.

10. Le système MSTNT selon la revendication 1, dans lequel le système MSTNT utilise une infrastructure en nuage pour la consignation de l'architecture réseau.

11. Une méthode de réseautage de tunnel multi-service "MSTNT", utilisant plusieurs fournisseurs de services Internet et formant des tunnels logiques au sein d'un seul canal de communication physique, la méthode comprenant:
la réception d'un paquet de protocole Internet "IP packet" à un point de répartition;
le dispatch d'un paquet MSTN vers un tunnel logique;
la réception du paquet MSTN à destination; et
la livraison du paquet IP à un utilisateur, dans lequel le transport des paquets de données depuis des dispositifs numériques ou leurs réseaux vers un utilisateur, et inversement, s'effectue via des services de données réseau,
**caractérisée en ce que**
le dispatch du paquet MSTN est réalisé par plusieurs canaux IP de transport, permettant de sommer la largeur de bande des sous-canaux individuels, et **en ce que** le dispatch est exécuté au niveau du noyau du MPT OS.

12. La méthode MSTNT selon la revendication 11, dans laquelle la méthode utilise la fragmentation des paquets MSTN pour le transport des paquets de données via le tunnel logique, et l'ordre de livraison des paquets isolés est maintenu après la fragmentation des paquets MSTN, ainsi que lors des étapes de dispatch et de réception du paquet MSTN.

13. La méthode MSTNT selon la revendication 11, dans laquelle:
des paquets IP sont convertis en paquets MSTN avant le transport des paquets de données via le tunnel logique; et
des paquets IP sont reconstitués à partir de paquets MSTN après le transport des paquets de données via le tunnel logique.

14. La méthode MSTNT selon la revendication 11, dans laquelle la méthode utilise une gestion centralisée de l'ensemble de l'infrastructure réseau.

15. La méthode MSTNT selon la revendication 11, dans laquelle la méthode exécute automatiquement une surveillance constante de la qualité des connexions de tunnels logiques et de leur charge; lorsqu'un canal utilisé devient hors ligne ou ne fonctionne pas correctement pendant une période définie, le canal est automatiquement remplacé par un nouveau canal en ligne; une réservation de sous-canaux est effectuée pour une utilisation future, en fonction du dispatch actuel des paquets MSTN vers le tunnel logique et des besoins futurs.

16. La méthode MSTNT selon la revendication 11, dans laquelle les données envoyées via le tunnel logique sont chiffrées.

17. La méthode MSTNT selon la revendication 11, dans laquelle la méthode effectue une filtration des doublons de paquets MSTN.

18. La méthode MSTNT selon la revendication 11, dans laquelle la méthode est mise en œuvre pour des types de connexion comprenant le dispatch de données, la téléphonie numérique et/ou la visioconférence.
